# EUROPÄISCHE PATENTSCHRIFT

(11) **EP 4 616 680 B1**
(45) Veröffentlichungstag und Bekanntmachung des Hinweises auf die Patenterteilung: **21.10.2026**
(21) Anmeldenummer: 23798972.8
(22) Anmeldetag: 06.11.2023
(51) Int. Cl.: H05B 6/12

(54) **INDUKTIONSENERGIEÜBERTRAGUNGSSYSTEM**
INDUCTION ENERGY TRANSMISSION SYSTEM
SYSTÈME DE TRANSMISSION D'ÉNERGIE PAR INDUCTION

(30) Priorität: 11.11.2022 EP 22383088
(43) Veröffentlichungstag der Anmeldung: 17.09.2025
(73) Patentinhaber: BSH Hausgeräte GmbH, 81739 München (DE)
(72) Erfinder: VILLUENDAS LOPEZ, Francisco, 50009 Zaragoza (ES); MOYA NOGUES, Jesus Manuel, 50001 Zaragoza (ES); LLORENTE GIL, Sergio, 50009 Zaragoza (ES); PLUMED VELILLA, Emilio, 50007 Zaragoza (ES); TESA BETES, Jorge, 50018 Zaragoza (ES); PASCUAL AZA, Jorge, 50018 Zaragoza (ES)
(86) Internationale Anmeldenummer: PCT/EP2023/080848
(87) Internationale Veröffentlichungsnummer: WO 2024/099972

(56) Entgegenhaltungen:
- WO-A1-2022/233654
- WO-A1-2022/233660
- WO-A1-2023/118021

## Beschreibung

Die Erfindung betrifft ein Induktionsenergieübertragungssystem nach dem Oberbegriff des Anspruchs 1 und ein Verfahren zum Betrieb eines Induktionsenergieübertragungssystems nach dem Oberbegriff des Anspruchs 15.

Aus dem Stand der Technik sind bereits Induktionsenergieübertragungssysteme zur induktiven Übertragung von Energie von einer Primärspule einer Versorgungseinheit auf eine Sekundärspule einer Aufstelleinheit bekannt. Beispielsweise sind Induktionskochfelder bekannt, welche neben einer induktiven Beheizung von Gargeschirr auch zur induktiven Energieversorgung von Haushaltskleingeräten vorgesehen sind. Eine Steuerung der Versorgungseinheit durch eine Steuereinheit basiert dabei auf einem Parametersatz, wobei bei manchen bekannten Induktionsenergieübertragungssystemen zumindest ein Paramater des Parametersatzes, beispielsweise eine Eigeninduktivität der Sekundärspule, ein Energiebedarf oder eine elektrische Gesamtlast, drahtlos, beispielsweise per NFC, von der Aufstelleinheit an die Steuereinheit übertragen wird. Die Parameter des Parametersatzes, insbesondere die Aufstelleinheit betreffende Parameter, werden bei bisher bekannten Induktionsenergieübertragungssystemen als konstant angenommen und während eines Betriebs auftretende Veränderungen dieser Parameter werden bislang nicht berücksichtigt. Hierdurch ergeben sich nachteilig lange Reaktionszeiten bei der Inbetriebnahme oder bei Lastwechseln, eine geringe Effizienz bei der induktiven Energieübertragung sowie die Gefahr potentieller Beschädigungen von Komponenten, beispielsweise durch Überspannungen aufgrund zu ungenauer Parameter, wodurch ein Bedienkomfort für Nutzer bisher bekannter Induktionsenergieübertragungssysteme verringert ist.

WO2022/233654A1 offenbart ein Induktionsenergieübertragungssystem gemäß dem Oberbegriff des Anspruches 1.

Die Aufgabe der Erfindung besteht insbesondere, aber nicht beschränkt darauf, darin, ein gattungsgemäßes System mit verbesserten Eigenschaften hinsichtlich eines Bedienkomforts bereitzustellen. Die Aufgabe wird erfindungsgemäß durch die Merkmale der Ansprüche 1 und 15 gelöst, während vorteilhafte Ausgestaltungen und Weiterbildungen der Erfindung den Unteransprüchen entnommen werden können.

Die Erfindung geht aus von einem Induktionsenergieübertragungssystem, insbesondere Induktionsgarsystem, mit einer Aufstellplatte, mit einer Versorgungseinheit, welche zumindest ein unterhalb der Aufstellplatte angeordnetes Versorgungsinduktionselement zur induktiven Bereitstellung von Energie aufweist, mit einer Steuereinheit zur Steuerung der Versorgungseinheit, und mit zumindest einer Aufstelleinheit, welche zumindest eine Aufnahmeeinheit mit zumindest einem Aufnahmeinduktionselement zu einem Empfang der induktiv bereitgestellten Energie aufweist, wobei die Steuereinheit dazu vorgesehen ist, zur Steuerung der Versorgungseinheit einen Parametersatz heranzuziehen und zumindest einen Parameter des Parametersatzes von der Aufstelleinheit zu empfangen.

Es wird vorgeschlagen, dass die Steuereinheit dazu vorgesehen ist, zusätzlich einen Informationsparametersatz von der Aufstelleinheit zu empfangen, diesen zur Bestimmung von Koeffizienten zumindest einer multivariablen Regressionsgleichung heranzuziehen und daraus zumindest einen Korrekturfaktor für zumindest einen Parameter des Parametersatzes oder einen neuen Parametersatz zu bestimmen.

Durch eine derartige Ausgestaltung kann vorteilhaft ein Induktionsenergieübertragungssystem mit verbesserten Eigenschaften hinsichtlich eines Bedienkomforts bereitgestellt werden. Es kann insbesondere eine verbesserte Benutzererfahrung ermöglicht werden, indem eine Einschwingzeit zwischen dem Versorgungsinduktionselement und dem Aufnahmeinduktionselement verkürzt und eine genauere Kontrolle und eine schnellere Reaktion auf veränderte Bedingungen, beispielsweise ein Verschieben der Aufstelleinheit auf der Aufstellplatte, ermöglicht werden kann. Ferner kann vorteilhaft eine Betriebssicherheit verbessert werden. Es können insbesondere Gefahren durch Schäden von elektronischen Komponenten des Induktionsenergieübertragungssystems, beispielsweise aufgrund von Überspannungen und/oder Änderungen in einer elektromagnetischen Kopplung zwischen dem Versorgungsinduktionselement und dem Aufnahmeinduktionselement, reduziert, vorzugsweise minimiert, werden.

Das Induktionsenergieübertragungssystem weist zumindest eine Hauptfunktionalität in Form einer drahtlosen Energieübertragung, insbesondere in einer drahtlosen Energieversorgung von Aufstelleinheiten, auf. In einer vorteilhaften Ausgestaltung ist das Induktionsenergieübertragungssystem als ein Induktionsgarsystem mit zumindest einer von einer reinen Garfunktion abweichenden weiteren Hauptfunktion, insbesondere zumindest einer Energieversorgung und einem Betrieb von Haushaltskleingeräten, ausgebildet. Beispielsweise könnte das Induktionsenergieübertragungssystem als ein Induktionsbackofensystem und/oder als ein Induktionsgrillsystem ausgebildet sein. Insbesondere könnte die Versorgungseinheit als Teil eines Induktionsbackofens und/oder als Teil eines Induktionsgrills ausgebildet sein. Vorzugsweise ist das als Induktionsgarsystem ausgebildete Induktionsenergieübertragungssystem als ein Induktionskochfeldsystem ausgebildet. Die Versorgungseinheit ist dann insbesondere als Teil eines Induktionskochfelds ausgebildet. In einer weiteren vorteilhaften Ausgestaltung ist das Induktionsenergieübertragungssystem als ein Küchenenergieversorgungssystem ausgebildet und kann neben einer Hauptfunktion in Form einer Energieversorgung und eines Betriebs von Haushaltskleingeräten zusätzlich zur Bereitstellung von Garfunktionen vorgesehen sein.

Unter einer "Versorgungseinheit" soll eine Einheit verstanden werden, welche in wenigstens einem Betriebszustand induktiv Energie bereitstellt und welche insbesondere eine Hauptfunktionalität in Form einer Energiebereitstellung aufweist. Zu der Bereitstellung von Energie weist die Versorgungseinheit zumindest ein Versorgungsinduktionselement auf, welches insbesondere zumindest eine Spule, insbesondere zumindest eine Primärspule, aufweist und/oder als eine Spule ausgebildet ist und welches insbesondere in dem Betriebszustand induktiv Energie bereitstellt. Die Versorgungseinheit könnte zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche in dem Betriebszustand jeweils induktiv Energie bereitstellen könnten, und zwar insbesondere an ein einziges Aufnahmeinduktionselement oder an zumindest zwei oder mehrere Aufnahmeinduktionselemente zumindest einer Aufstelleinheit und/oder zumindest einer weiteren Aufstelleinheit. Zumindest ein Teil der Versorgungsinduktionselemente könnten in einem Nahbereich zueinander angeordnet, beispielsweise in einer Reihe und/oder in Form einer Matrix angeordnet sein. Vorzugsweise weist die Versorgungseinheit zumindest einen Kompensationskondensator auf, welcher mit dem Versorgungsinduktionselement elektrisch parallel oder elektrisch in Reihe geschaltet sein kann, und welcher insbesondere zu einer Blindleistungskompensation vorgesehen sein kann.

Unter einer "Steuereinheit" soll eine elektronische Einheit verstanden werden, die dazu vorgesehen ist, zumindest die Versorgungseinheit zu steuern und/oder zu regeln. Die Steuereinheit umfasst eine Recheneinheit und insbesondere zusätzlich zur Recheneinheit eine Speichereinheit mit zumindest einem darin gespeicherten Steuer- und/oder Regelprogramm, das dazu vorgesehen ist, von der Recheneinheit ausgeführt zu werden. Die Steuereinheit weist zumindest eine Wechselrichtereinheit auf. Vorzugsweise führt die Wechselrichtereinheit in dem Betriebszustand eine Frequenzwandlung durch und wandelt insbesondere eine eingangsseitige niederfrequente Wechselspannung in eine ausgangsseitige hochfrequente Wechselspannung um. Vorzugsweise weist die niederfrequente Wechselspannung eine Frequenz von höchstens 100 Hz auf. Vorzugsweise weist die hochfrequente Wechselspannung eine Frequenz von mindestens 1000 Hz auf. Vorzugsweise ist die Wechselrichtereinheit dazu vorgesehen, die Einstellung der durch das zumindest eine Versorgungsinduktionselement induktiv bereitgestellten Energie durch Einstellung der hochfrequenten Wechselspannung vorzunehmen. Vorzugsweise umfasst die Steuereinheit zumindest einen Gleichrichter. Die Wechselrichtereinheit weist zumindest ein Wechselrichterschaltelement auf. Vorzugsweise erzeugt das Wechselrichterschaltelement zu einem Betrieb des zumindest einen Versorgungsinduktionselements einen oszillierenden elektrischen Strom, vorzugsweise mit einer Frequenz von zumindest 15 kHz, insbesondere von wenigstens 17 kHz und vorteilhaft von mindestens 20 kHz. Vorzugsweise umfasst die Wechselrichtereinheit zumindest zwei Wechselrichterschaltelemente, welche bevorzugt als Bipolartransistoren mit isolierter Gateelektrode ausgebildet sind und besonders vorteilhaft zumindest einen Dämpfungskondensator.

Unter einer "Aufstelleinheit" soll eine Einheit verstanden werden, welche in wenigstens einem Betriebszustand induktiv Energie empfängt und die induktiv empfangene Energie zumindest teilweise in zumindest eine weitere Energieform zur Bereitstellung zumindest einer Hauptfunktion umwandelt. Beispielsweise könnte die von der Aufstelleinheit induktiv empfangene Energie in dem Betriebszustand, insbesondere direkt, in zumindest eine weitere Energieform umgewandelt werden, wie beispielsweise in Wärme. Alternativ oder zusätzlich könnte die Aufstelleinheit zumindest einen elektrischen Verbraucher, beispielsweise einen Elektromotor oder dergleichen, aufweisen. Die Aufstelleinheit weist zumindest eine Aufnahmeeinheit mit einem Aufnahmeinduktionselement zu dem Empfang der induktiv bereitgestellten Energie auf. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Aufnahmeinduktionselemente aufweisen, welche insbesondere in dem Betriebszustand jeweils induktiv Energie, insbesondere von dem Versorgungsinduktionselement, empfangen könnten. Die Aufstelleinheit könnte beispielsweise als ein Gargeschirr ausgebildet sein. Das Gargeschirr weist vorzugsweise zumindest einen Lebensmittelaufnahmeraum auf und wandelt die induktiv empfangene Energie in dem Betriebszustand zumindest teilweise in Wärme zu einer Beheizung von in dem Lebensmittelaufnahmeraum angeordneten Lebensmitteln um. Vorzugsweise weist die als Gargeschirr ausgebildete Aufstelleinheit zumindest eine weitere Einheit, zu einer Bereitstellung zumindest einer weiteren Funktion, welche über eine reine Beheizung von Lebensmitteln hinausgeht und/oder von einer Beheizung von Lebensmitteln abweicht, auf. Beispielsweise könnte die weitere Einheit als ein Temperatursensor oder als eine Rühreinheit oder dergleichen ausgebildet sein. Alternativ könnte die Aufstelleinheit als ein Haushaltskleingerät ausgebildet sein. Vorzugsweise handelt es sich bei dem Haushaltskleingerät um ein standortungebundenes Haushaltsgerät, welches zumindest das Aufnahmeinduktionselement und zumindest eine Funktionseinheit, welche in einem Betriebszustand zumindest eine Haushaltsgerätefunktion bereitstellt, aufweist. Unter "standortungebunden" soll in diesem Zusammenhang verstanden werden, dass das Haushaltskleingerät in einem Haushalt durch einen Nutzer frei, und insbesondere ohne Hilfsmittel, positionierbar ist, insbesondere im Unterschied zu einem Haushaltsgroßgerät, welches an einer bestimmten Position in einem Haushalt fest positioniert und/oder installiert ist, wie beispielsweise ein Backofen oder ein Kühlschrank. Vorzugsweise ist das Haushaltskleingerät als ein Küchenkleingerät ausgebildet und stellt in dem Betriebszustand zumindest eine Hauptfunktion zu einer Bearbeitung von Lebensmitteln bereit. Das Haushaltskleingerät könnte, ohne darauf beschränkt zu sein, beispielsweise als eine Küchenmaschine und/oder als ein Mixer und/oder als ein Rührer und/oder als eine Mühle und/oder als eine Küchenwaage oder als ein Wasserkocher oder als eine Kaffeemaschine oder als ein Reiskocher oder als ein Milchaufschäumer oder als eine Fritteuse oder als ein Toaster oder als ein Entsafter oder als eine Schneidemaschine oder dergleichen ausgebildet sein.

Das Aufnahmeinduktionselement der Aufnahmeeinheit umfasst zumindest eine Sekundärspule und/oder ist als eine Sekundärspule ausgebildet. In einem Betriebszustand der Aufstelleinheit versorgt das Aufnahmeinduktionselement zumindest einen Verbraucher der Aufstelleinheit mit elektrischer Energie. Darüber hinaus ist denkbar, dass die Aufstelleinheit einen Energiespeicher, insbesondere einen Akkumulator, aufweist, welcher dazu vorgesehen ist, eine über das Aufnahmeinduktionselement empfangene elektrische Energie in einem Ladezustand zu speichern und in einem Entladezustand zu der Versorgung der Funktionseinheit bereitzustellen. Vorzugsweise weist die Aufnahmeeinheit zumindest einen Kompensationskondensator auf, welcher mit dem Aufnahmeinduktionselement elektrisch parallel oder elektrisch in Reihe geschaltet ist, und welcher insbesondere zu einer Blindleistungskompensation vorgesehen sein kann.

Unter einer "Aufstellplatte" soll zumindest eine, insbesondere plattenartige, Einheit des Induktionsenergieübertragungssystems verstanden werden, welche zu einem Aufstellen wenigstens einer Aufstelleinheit und/oder zu einem Auflegen wenigstens eines Garguts vorgesehen ist. Die Aufstellplatte könnte beispielsweise als eine Arbeitsplatte, insbesondere als eine Küchenarbeitsplatte, oder als ein Teilbereich zumindest einer Arbeitsplatte, insbesondere zumindest einer Küchenarbeitsplatte, insbesondere des Induktionsenergieübertragungssystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Vorzugsweise ist die Aufstellplatte aus einem nichtmetallischen Werkstoff hergestellt. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Kunststoff und/oder aus Keramik gebildet sein. In dem vorliegenden Dokument beziehen sich Lagebezeichnungen, wie beispielsweise "unterhalb" oder "oberhalb", auf einen montierten Zustand der Aufstellplatte, sofern dies nicht explizit anderweitig beschrieben ist. In dem montierten Zustand ist die Versorgungseinheit vorzugsweise unterhalb der Aufstellplatte angeordnet.

Vorzugsweise umfasst das Induktionsenergieübertragungssystem eine Kommunikationseinheit. Die Kommunikationseinheit ist vorzugsweise zu einer bidirektionalen drahtlosen Datenübertragung, das heißt sowohl zu einem drahtlosen Empfang als auch zu einem drahtlosen Senden von Daten zwischen der Steuereinheit und der Aufstelleinheit vorgesehen. Vorzugsweise weist die Kommunikationseinheit zumindest ein Kommunikationselement auf, welches mit der Steuereinheit verbunden und insbesondere zu einem drahtlosen Empfangen und Senden von Daten vorgesehen ist. Vorzugsweise weist die Kommunikationseinheit zumindest ein weiteres Kommunikationselement auf, welches innerhalb der Aufstelleinheit angeordnet und insbesondere zu einem drahtlosen Empfangen und Senden von Daten vorgesehen ist. Die Kommunikationseinheit könnte zu einer drahtlosen Datenübertragung zwischen der Aufstelleinheit und der Steuereinheit per RFID, oder per WIFI, oder per Bluetooth oder per ZigBee oder zur drahtlosen Datenübertragung nach einem anderen geeigneten Standard vorgesehen sein. Vorzugsweise ist die Kommunikationseinheit zu einer drahtlosen Datenübertragung zwischen der Aufstelleinheit und der Steuereinheit per NFC vorgesehen. Vorzugsweise ist die Steuereinheit dazu vorgesehen, den zumindest einen Parameter des Parametersatzes drahtlos von der Aufstelleinheit zu empfangen, und zwar mittels der Kommunikationseinheit.

Unter einem "Parametersatz" soll eine Mehrzahl von zumindest zwei Parametern verstanden werden, welchen die Steuereinheit zur Steuerung der Versorgung heranzieht und anhand derer die Steuereinheit die durch die Versorgungseinheit induktiv bereitgestellte Energie entsprechend einer Art der Aufstelleinheit und/oder entsprechend eines, insbesondere durch einen Nutzer des Induktionsenergieübertragungssystems wählbaren, aktuellen Betriebszustands der Aufstelleinheit steuert. Der Parametersatz umfasst vorzugsweise zumindest eine konstante konstruktive und/oder geometrische Kenngröße des Versorgungsinduktionselements und/oder des Aufnahmeinduktionselements. Konstruktive und/oder geometrische Kenngrößen könnten dabei, ohne darauf beschränkt zu sein, beispielsweise eine Form und/oder Größe, insbesondere einen Radius und/oder Innendurchmesser und/oder einen Außendurchmesser, und/oder eine Querschnittsfläche und/oder eine Wicklungszahl und/oder ein Material und/oder eine räumliche Position des Aufnahmeinduktionselements innerhalb der Aufstelleinheit umfassen und/oder einen vertikalen Abstand des Versorgungsinduktionselements zu der Aufstellplatte und/oder dergleichen sein.

Vorzugsweise umfasst zumindest ein Parameter des Parametersatzes eine, insbesondere zeitlich veränderliche, elektrische Kenngröße des Versorgungsinduktionselements und/oder des Aufnahmeinduktionselements, beispielsweise Beträge von elektrischen Widerständen und/oder Impedanzen in einem Primärschaltkreis der Versorgungseinheit und/oder in einem Sekundärschaltkreis der Aufnahmeeinheit und/oder Induktivitäten, insbesondere Eigeninduktivitäten, und/oder magnetische Flussdichten des Versorgungsinduktionselements und/oder des Aufnahmeinduktionselements und/oder eine Resonanzfrequenz und/oder eine Materialkonstante, beispielsweise eine magnetische Permeabilität eines magnetischen Flussbündelungselements der Versorgungseinheit und/oder der Aufnahmeeinheit. Ferner kann zumindest ein Parameter des Betriebsparametersatzes zumindest eine Betriebskenngröße der Aufstelleinheit, beispielsweise eine Maximalleistung und/oder eine Minimalleistung und/oder Anzahl von Leistungsstufen und/oder eine Anzahl und/oder Art von betreibbaren elektrischen Lasten und/oder eine in einem Betriebszustand benötigte Spannung und/oder Stromstärke umfassen.

Unter einem "Informationsparametersatz" soll eine Mehrzahl von zumindest zwei Informationsparametern verstanden werden, welche in einer Speichereinheit der Aufstelleinheit gespeichert sind und welche die Steuereinheit in einem Betriebszustand des Induktionsenergieübertragungssystems von der Aufstelleinheit, vorzugsweise drahtlos über die Kommunikationseinheit, empfängt. Der Informationsparametersatz umfasst zumindest einen, vorzugsweise zumindest zwei und bevorzugt zumindest drei Informationsparameter, welche in einem standardisierten Test gemessen wurden. Bei dem/den in dem standardisierten Test gemessenen Informationsparameter/n kann es sich, ohne darauf beschränkt zu sein, um eine Eigeninduktivität des Aufnahmeinduktionselements und/oder um eine Eigeninduktivität eines für den standardisierten Test verwendeten Versorgungsinduktionselements und/oder um einen Kopplungsfaktor zwischen dem Aufnahmeinduktionselement und dem für den standardisierten Test verwendeten Versorgungsinduktionselement handeln. Vorzugsweise sind in der Speichereinheit der Aufstelleinheit zumindest zwei, bevorzugt zumindest drei und besonders bevorzugt zumindest vier Informationsparameter gespeichert, welche jeweils in verschiedenen standardisierten Tests gemessen wurden, wobei sich die verschiedenen standardisierten Tests voneinander zumindest hinsichtlich eines Testparameters unterscheiden. Beispielsweise können das Aufnahmeinduktionselement und das für den standardisierten Test verwendete Versorgungsinduktionselement während eines ersten standardisierten Tests in einem ersten vertikalen Abstand zueinander und ohne einen horizontalen Versatz zueinander, in einem zweiten standardisierten Test in dem ersten vertikalen Abstand zueinander und mit einem bestimmten horizontalen Versatz zueinander, in einem dritten standardisierten Test in einem von dem ersten Abstand verschiedenen zweiten Abstand und ohne horizontalen Versatz zueinander und in einem vierten standardisierten Test in dem zweiten Abstand und mit dem bestimmten horizontalen Versatz zueinander angeordnet sein. Denkbar ist alternativ oder zusätzlich auch, dass für verschiedene standardisierte Tests verschiedene Versorgungsinduktionselemente, welche sich beispielsweise hinsichtlich ihres Materials und/oder ihres Innendurchmessers und/oder ihres Außendurchmessers und/oder ihrer Wicklungszahl und/oder dergleichen unterscheiden können, verwendet werden.

Die zumindest eine multivariable Regressionsgleichung kann in der Speichereinheit der Steuereinheit gespeichert sein. Denkbar ist alternativ oder zusätzlich auch, dass die zumindest eine multivariable Regressionsgleichung in der Speichereinheit der Aufstelleinheit gespeichert und von der Steuereinheit in dem Betriebszustand, insbesondere drahtlos über die Kommunikationseinheit, empfangen wird. Die multivariable Regressionsgleichung weist zumindest zwei Koeffizienten auf, kann jedoch auch mehr als zwei Koeffizienten aufweisen. Die Steuereinheit kann dazu vorgesehen sein, den Informationsparametersatz zur Bestimmung von Koeffizienten der multivariablen Regressionsgleichung zur Bestimmung eines Korrekturfaktors eines Parameters des Parametersatzes, beispielsweise der Eigeninduktivität des Versorgungsinduktionselements, und zur Bestimmung von weiteren Koeffizienten einer weiteren Regressionsgleichung zur Bestimmung eines weiteren Korrekturfaktors eines anderen Parameters des Parametersatzes, beispielsweise der Eigeninduktivität des Aufnahmeinduktionselements, heranzuziehen. Die Steuereinheit ist dazu vorgesehen, zumindest einen Koeffizienten der multivariablen Regressionsgleichung rechnerisch zu bestimmen, wobei zumindest eine Berechnungsvorschrift, insbesondere eine oder mehrere Formeln, zur Berechnung dieses Koeffizienten in der Speichereinheit der Steuereinheit gespeichert sein kann. Denkbar ist auch, dass die zumindest eine Berechnungsvorschrift in der Speichereinheit der Aufstelleinheit gespeichert ist und die Steuereinheit dazu vorgesehen ist, diesen von der Aufstelleinheit, insbesondere drahtlos über die Kommunikationseinheit, zusammen mit dem Informationsparametersatz und/oder als Informationsparameter des Informationsparametersatzes zu empfangen. Zumindest ein Koeffizient der multivariablen Regressionsgleichung kann konstant sein, wobei die Steuereinheit dazu vorgesehen sein kann, diesen konstanten Koeffizienten als Informationsparameter des Informationsparametersatzes, insbesondere drahtlos über die Kommunikationseinheit, von der Aufstelleinheit zu empfangen.

Die Steuereinheit kann dazu vorgesehen sein, mittels des zumindest einen bestimmten Korrekturfaktors und/oder des neuen Parametersatzes einen digitalen Zwilling der Aufstelleinheit zu erstellen und einen speziell auf die Aufstelleinheit abgestimmten Parametersatz in der Speichereinheit zu speichern, sodass bei einem erneuten Betrieb der Aufstelleinheit vorteilhaft eine erneute Bestimmung zumindest eines Korrekturfaktors entfallen und eine Effizienz gesteigert werden kann.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit dazu vorgesehen ist, bei der Bestimmung des neuen Parametersatzes einen horizontalen Versatz zwischen dem Versorgungsinduktionselement und dem Aufnahmeinduktionselement zu berücksichtigen. Hierdurch kann vorteilhaft ein Bedienkomfort weiter verbessert werden. Es kann insbesondere eine Genauigkeit bei der Bestimmung des neuen Parametersatzes erhöht werden. Unter einem "horizontalen Versatz" soll in dem vorliegenden Dokument ein Abstand zwischen einem geometrischen Mittelpunkt des Versorgungsinduktionselements und einem geometrischen Mittelpunkt des Aufnahmeinduktionselements parallel zu einer Haupterstreckungsebene der Aufstellplatte verstanden werden. Unter einer "Haupterstreckungsebene" einer Baueinheit soll eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Zudem wird vorgeschlagen, dass die Steuereinheit dazu vorgesehen ist, einen Korrekturfaktor für eine Eigeninduktivität des Versorgungsinduktionselements zu bestimmen. Hierdurch kann vorteilhaft ein Bedienkomfort weiter verbessert werden. Es kann insbesondere ein genauerer Wert der Eigeninduktivität des Versorgungsinduktionselements, welcher bei bisher bekannten Induktionsenergieübertragungssystemen aus dem Stand der Technik vereinfachend als konstant angenommen wird, für den Betrieb der Versorgungseinheit herangezogen und damit ein effizienterer Betrieb des Induktionsenergieübertragungssystems ermöglicht werden. Des Weiteren wird vorgeschlagen, dass die Steuereinheit dazu vorgesehen ist, einen Korrekturfaktor für eine Eigeninduktivität des Aufnahmeinduktionselements zu bestimmen. Durch eine derartige Ausgestaltung kann ein Bedienkomfort noch weiter verbessert werden. Es kann insbesondere ein genauerer Wert der Eigeninduktivität des Aufnahmeinduktionselements, welcher bei bisher bekannten Induktionsenergieübertragungssystemen aus dem Stand der Technik vereinfachend als konstant angenommen wird, für den Betrieb der Versorgungseinheit herangezogen werden, wodurch eine Effizienz beim Betrieb des Induktionsenergieübertragungssystems weiter verbessert werden kann.

Ferner wird vorgeschlagen, dass die Steuereinheit dazu vorgesehen ist, einen Korrekturfaktor für einen Lastwiderstand der Aufstelleinheit zu bestimmen. Hierdurch kann vorteilhaft ein besonders effizienter und sicherer Betrieb ermöglicht werden. Eine derartige Ausgestaltung erweist sich insbesondere bei einem Betrieb von Aufstelleinheiten, welche einen während des Betriebs schwankenden Lastwiderstand, beispielsweise aufgrund eines Antriebsmotors für eine Rühreinheit oder dergleichen, aufweisen, als besonders vorteilhaft, da mittels des Korrekturfaktors Schwankungen des Lastwiderstands durch die Steuereinheit bei der Steuerung der Versorgungseinheit durch Anpassung der bereitgestellten Leistung berücksichtigt werden können. Vorzugsweise ist die Steuereinheit dazu vorgesehen, den Korrekturfaktor für den Lastwiderstand der Aufstelleinheit mit einer zeitlichen Verzögerung von höchstens einer Periodendauer einer Netzwechselspannung, das heißt beispielsweise bei einer Netzfrequenz von 50 Hz mit einer Verzögerung von höchstens 20 ms, zu bestimmen.

Zudem wird vorgeschlagen, dass die Aufstellplatte als eine Kochfeldplatte ausgebildet ist. Durch eine derartige Ausgestaltung kann ein als Induktionsgarsystem ausgebildetes Induktionsenergieübertragungssystem mit den vorhergenannten vorteilhaften Eigenschaften bereitgestellt werden, welches neben einer induktiven Energieversorgung von Haushaltskleingeräten durch die Versorgungseinheit gemäß den vorhergehend beschriebenen Ausgestaltungen zusätzlich auch ein induktives Beheizen von Gargeschirr ermöglicht.

In einer alternativen vorteilhaften Ausgestaltung wird vorgeschlagen, dass die Aufstellplatte als eine Küchenarbeitsplatte ausgebildet ist. Hierdurch kann ein Induktionsenergieübertragungssystem mit den vorhergenannten vorteilhaften Eigenschaften sowie mit einem besonders hohen Maß an Ästhetik und Funktionalität bereitgestellt werden. Zudem kann vorteilhaft eine Faszination für induktive Energieübertragung gesteigert werden, wenn die Aufstellplatte als eine Küchenarbeitsplatte ausgebildet ist, da manche Komponenten des Induktionsenergieübertragungssystems, insbesondere die Versorgungseinheit, unter der Küchenarbeitsplatte für einen Nutzer vollkommen unsichtbar bleiben und so der Eindruck entstehen kann, dass die Aufstelleinheit ohne jegliche Energiequelle betrieben wird. Auch im Falle einer als Küchenarbeitsplatte ausgebildeten Aufstellplatte könnte das Induktionsenergieübertragungssystem als ein Induktionsgarsystem ausgebildet sein, wobei die Versorgungseinheit neben einer induktiven Energieversorgung von als Haushaltskleingeräten ausgebildeten Aufstelleinheiten zusätzlich auch zu einem induktiven Beheizen von Gargeschirr vorgesehen sein könnte.

Darüber hinaus wird vorgeschlagen, dass die Steuereinheit dazu vorgesehen ist, bei der Bestimmung der Koeffizienten der multivariablen Regressionsgleichung einen vertikalen Abstand zwischen dem Versorgungsinduktionselement und einer Oberseite der Aufstellplatte heranzuziehen. Hierdurch kann vorteilhaft eine genauere Bestimmung des Korrekturfaktors ermöglicht werden. Es kann insbesondere verschiedenen Arten von Aufstellplatten, welche entweder als Kochfeldplatte oder als Küchenarbeitsplatte ausgebildet sein können und unterhalb derer die Versorgungseinheit in verschiedenen vertikalen Abständen angeordnet sein kann, Rechnung getragen werden. Vorzugsweise ist der vertikale Abstand zwischen dem Versorgungsinduktionselement und der Oberseite der Aufstellplatte in der Speichereinheit der Steuereinheit gespeichert. Weiterhin wird vorgeschlagen, dass der Informationsparametersatz einen vertikalen Abstand zwischen dem Aufnahmeinduktionselement und der Oberseite der Aufstellplatte beinhaltet. Durch eine derartige Ausgestaltung kann vorteilhaft eine Genauigkeit bei der Bestimmung des zumindest einen Korrekturfaktors weiter erhöht werden. Vorzugsweise ist der vertikale Abstand zwischen dem Aufnahmeinduktionselement und einer Oberseite der Aufstellplatte in der Speichereinheit der Aufstelleinheit gespeichert und die Steuereinheit ist dazu vorgesehen, diesen von der Aufstelleinheit, insbesondere als Informationsparameter und insbesondere drahtlos mittels der Kommunikationseinheit, zu empfangen. Vorzugsweise ist die Steuereinheit dazu vorgesehen, den vertikalen Abstand zwischen dem Versorgungsinduktionselement und der Oberseite der Aufstellplatte und den vertikalen Abstand zwischen dem Aufnahmeinduktionselement und der Oberseite der Aufstellplatte zu addieren, um einen Abstand des Versorgungsinduktionselements und des Aufnahmeinduktionselements zu bestimmen. Der vertikale Abstand zwischen dem Versorgungsinduktionselement und der Oberseite der Aufstellplatte ist ausgehend von dem geometrischen Mittelpunkt des Versorgungsinduktionselements gemessen und erstreckt sich ausgehend von dem geometrischen Mittelpunkt des Versorgungsinduktionselements entlang einer gedachten Geraden, welche senkrecht zur Haupterstreckungsebene der Aufstellplatte verläuft, bis zu einem Schnittpunkt dieser Geraden mit der Oberseite der Aufstellplatte. Der vertikale Abstand zwischen dem Aufnahmeinduktionselement und der Oberseite der Aufstellplatte ist ausgehend von dem geometrischen Mittelpunkt des Aufnahmeinduktionselements gemessen und erstreckt sich ausgehend von dem geometrischen Mittelpunkt des Aufnahmeinduktionselements entlang einer gedachten Geraden, welche senkrecht zur Haupterstreckungsebene der Aufstellplatte verläuft, bis zu einem Schnittpunkt dieser Geraden mit der Oberseite der Aufstellplatte.

Zudem wird vorgeschlagen, dass der Informationsparametersatz zumindest einen geometrischen Informationsparameter des Aufnahmeinduktionselements umfasst. Hierdurch kann vorteilhaft eine Genauigkeit bei der Bestimmung des zumindest einen Korrekturfaktors und/oder des neuen Parametersatzes erhöht werden. Bei einem geometrischen Informationsparameter kann es sich, ohne darauf beschränkt zu sein, beispielsweise um einen Innendurchmesser und/oder einen Außendurchmesser und/oder eine Dicke des Aufnahmeinduktionselements handeln. Vorzugsweise umfasst der Informationsparametersatz mehrere geometrische Informationsparameter.

Ferner wird vorgeschlagen, dass die Aufstelleinheit eine Abschirmeinheit aufweist und der Informationsparametersatz zumindest einen die Abschirmeinheit betreffenden Informationsparameter umfasst. Hierdurch kann vorteilhaft eine Genauigkeit bei der Bestimmung des zumindest einen Korrekturfaktors und/oder des neuen Parametersatzes erhöht werden. Zudem können empfindliche Komponenten der Aufstelleinheit durch die Abschirmeinheit wirksam vor Störeinflüssen des in einem Betriebszustand der Versorgungseinheit wirkenden elektromagnetischen Wechselfelds geschützt werden. Bei dem die Abschirmeinheit betreffenden Informationsparameter kann es sich beispielsweise um eine Information bezüglich eines Materials der Abschirmeinheit, welches diese aufweist und/oder aus welchem diese ausgebildet ist, beispielsweise Aluminium und/oder Eisen, handeln.

Des Weiteren wird vorgeschlagen, dass die Aufnahmeeinheit eine Flussbündelungseinheit aufweist und der Informationsparametersatz zumindest einen die Flussbündelungseinheit betreffenden Informationsparameter umfasst. Wenn die Aufnahmeeinheit eine Flussbündelungseinheit aufweist, kann vorteilhaft eine Effizienz bei der induktiven Energieversorgung der Aufstelleinheit verbessert werden. Wenn der Informationsparametersatz zumindest einen die Flussbündelungseinheit betreffenden Informationsparameter umfasst, kann zudem vorteilhaft eine Genauigkeit bei der Bestimmung des zumindest einen Korrekturfaktors und/oder des neuen Parametersatzes noch weiter erhöht werden. Vorzugsweise weist die Flussbündelungseinheit zumindest ein Flussbündelungselement auf, welches als ein Ferrit ausgebildet ist. Der die Flussbündelungseinheit betreffenden Informationsparameter kann, ohne darauf beschränkt zu sein, beispielsweise Informationen bezüglich einer Anzahl von Ferriten der Flussbündelungseinheit und/oder bezüglich eines Bereichs oder mehrere Bereiche, in dem der Ferrit/die Ferrite angeordnet sind, umfassen.

Die Erfindung betrifft ferner eine Aufstelleinheit, insbesondere ein Haushaltskleingerät, eines Induktionsenergieübertragungssystems nach einer der vorhergehend beschriebenen Ausgestaltungen. Ein derartige Aufstelleinheit zeichnet sich insbesondere durch einen erhöhten Bedienkomfort in einem Betrieb innerhalb des Induktionsenergieübertragungssystems aus.

Die Erfindung betrifft zudem ein Induktionshaushaltsgerät, insbesondere ein Induktionskochfeld, eines Induktionsenergieübertragungssystems nach einer der vorhergehend beschriebenen Ausgestaltungen, welches die Versorgungseinheit und die Steuereinheit umfasst. Ein derartiges Induktionshaushaltsgerät zeichnet sich insbesondere durch einen erhöhten Bedienkomfort in einem Betrieb innerhalb des Induktionsenergieübertragungssystems aus.

Die Erfindung geht ferner aus von einem Verfahren zum Betrieb eines Induktionsenergieübertragungssystems, insbesondere nach einer der vorhergehend beschriebenen Ausgestaltungen, mit einer Aufstellplatte, mit einer Versorgungseinheit, welche zumindest ein unterhalb der Aufstellplatte angeordnetes Versorgungsinduktionselement zur induktiven Bereitstellung von Energie aufweist, und mit zumindest einer Aufstelleinheit, welche zumindest eine Aufnahmeeinheit mit zumindest einem Aufnahmeinduktionselement zu einem Empfang der induktiv bereitgestellten Energie aufweist, wobei zur Steuerung der Versorgungseinheit ein Parametersatz herangezogen und zumindest ein Parameter des Parametersatzes von der Aufstelleinheit bereitgestellt wird.

Es wird vorgeschlagen, dass zusätzlich ein Informationsparametersatz von der Aufstelleinheit bereitgestellt wird, welcher zur Bestimmung von Koeffizienten zumindest einer multivariablen Regressionsgleichung herangezogen wird, wobei daraus zumindest einen Korrekturfaktor für zumindest einen Parameter des Parametersatzes oder ein neuer Parametersatz bestimmt wird. Hierdurch kann vorteilhaft ein besonders bedienerfreundliches und effizientes Verfahren zum Betrieb des Induktionsenergieübertragungssystems bereitgestellt werden.

Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Ein Induktionsenergieübertragungssystem mit einer Versorgungseinheit, einer Steuereinheit zur Steuerung der Versorgungseinheit, einer Aufstelleinheit und einer weiteren Aufstelleinheit, welche jeweils eine Aufnahmeeinheit umfassen, in einer schematischen Darstellung,
- Fig. 2: zwei schematische Diagramme zur Darstellung von Einflussgrößen auf die Eigeninduktivitäten eines Versorgungsinduktionselements der Versorgungseinheit und eines Aufnahmeinduktionselements der Aufnahmeeinheit,
- Fig. 3: vier schematische Darstellungen von möglichen Anordnungen zwischen dem Versorgungselement und dem Aufnahmeinduktionselement,
- Fig. 4: die Versorgungseinheit und die Aufstelleinheit mit einer Abschirmeinheit in einer schematischen Darstellung,
- Fig. 5: die Aufnahmeeinheit der Aufstelleinheit in einer schematischen Darstellung,
- Fig. 6: eine Flussbündelungseinheit der Aufstelleinheit in einer schematischen Darstellung,
- Fig. 7: ein schematisches Blockschaltbild zur Darstellung einer Funktionsweise der Steuereinheit,
- Fig. 8: zwei schematische Diagramme zur Darstellung von Korrekturfaktoren für Parameter eines Parametersatzes, mittels dessen die Steuereinheit die Versorgungseinheit betreibt,
- Fig. 9: ein schematisches Verfahrensfließbild eines Verfahrens zum Betrieb des Induktionsenergieübertragungssystems und
- Fig. 10: ein weiteres Ausführungsbeispiel eines Induktionsenergieübertragungssystems mit einer Versorgungseinheit, einer Steuereinheit einer Aufstelleinheit und einer weiteren Aufstelleinheit in einer schematischen Darstellung.

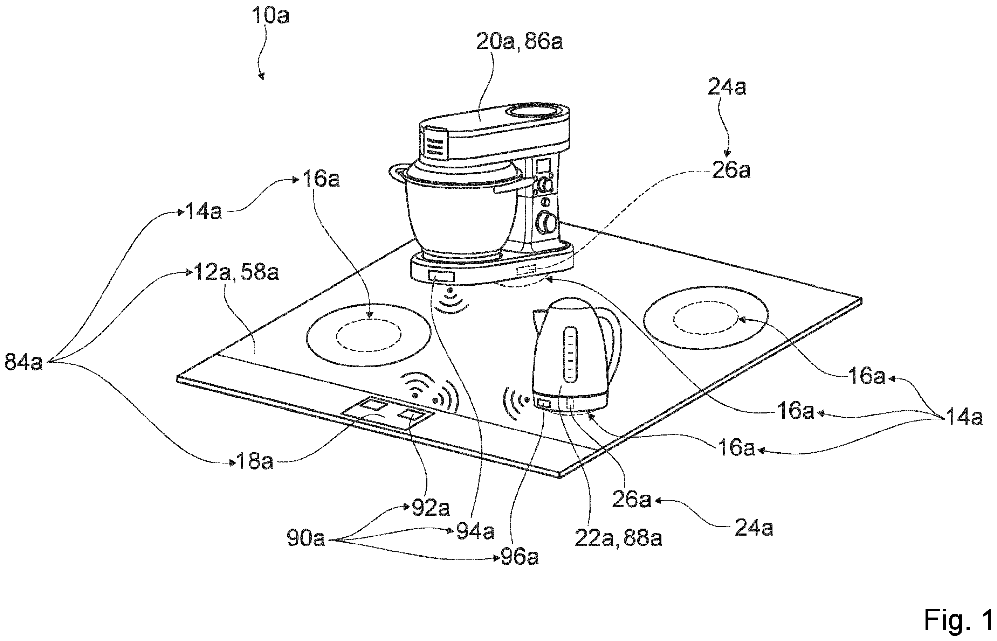

Figur 1 zeigt ein Induktionsenergieübertragungssystem 10a in einer schematischen Darstellung. Das Induktionsenergieübertragungssystem 10a weist eine Aufstellplatte 12a auf. Das Induktionsenergieübertragungssystem 10a ist vorliegend als ein Induktionsgarsystem ausgebildet und umfasst ein Induktionshaushaltsgerät 84a. Vorliegend ist das Induktionshaushaltsgerät 84a als ein Induktionskochfeld ausgebildet. Die Aufstellplatte 12a ist als eine Kochfeldplatte 58a ausgebildet. Vorliegend ist die Kochfeldplatte 58a Teil des Induktionshaushaltsgeräts 84a.

Das Induktionsenergieübertragungssystem 10a weist eine Versorgungseinheit 14a auf. Die Versorgungseinheit 14a weist zumindest ein unterhalb der Aufstellplatte 12a angeordnetes Versorgungsinduktionselement 16a zur induktiven Bereitstellung von Energie auf. Vorliegend umfasst die Versorgungseinheit 14a insgesamt vier Versorgungsinduktionselemente 16a, welche jeweils unterhalb der Aufstellplatte 12a angeordnet sind. Alternativ könnte die Versorgungseinheit 14a jedoch eine beliebige andere Anzahl an Versorgungsinduktionselementen 16a aufweisen, welche größer oder gleich eins ist.

Das Induktionsenergieübertragungssystem 10a weist eine Aufstelleinheit 20a auf. Die Aufstelleinheit 20a weist eine Aufnahmeeinheit 24a mit einem Aufnahmeinduktionselement 26a zu einem Empfang der durch die Versorgungseinheit 14a induktiv bereitgestellten Energie auf. Vorliegend ist die Aufstelleinheit 20a als ein Haushaltskleingerät ausgebildet, und zwar als eine Küchenmaschine 86a. Das Induktionsenergieübertragungssystem 10a weist vorliegend eine weitere Aufstelleinheit 22a auf. Die weitere Aufstelleinheit 22a umfasst ebenfalls eine Aufnahmeeinheit 24a mit einem Aufnahmeinduktionselement 26a zu einem Empfang der durch die Versorgungseinheit 14a induktiv bereitgestellten Energie. Die weitere Aufstelleinheit 22a ist vorliegend als ein weiteres Haushaltskleingerät ausgebildet, und zwar als ein Wasserkocher 88a.

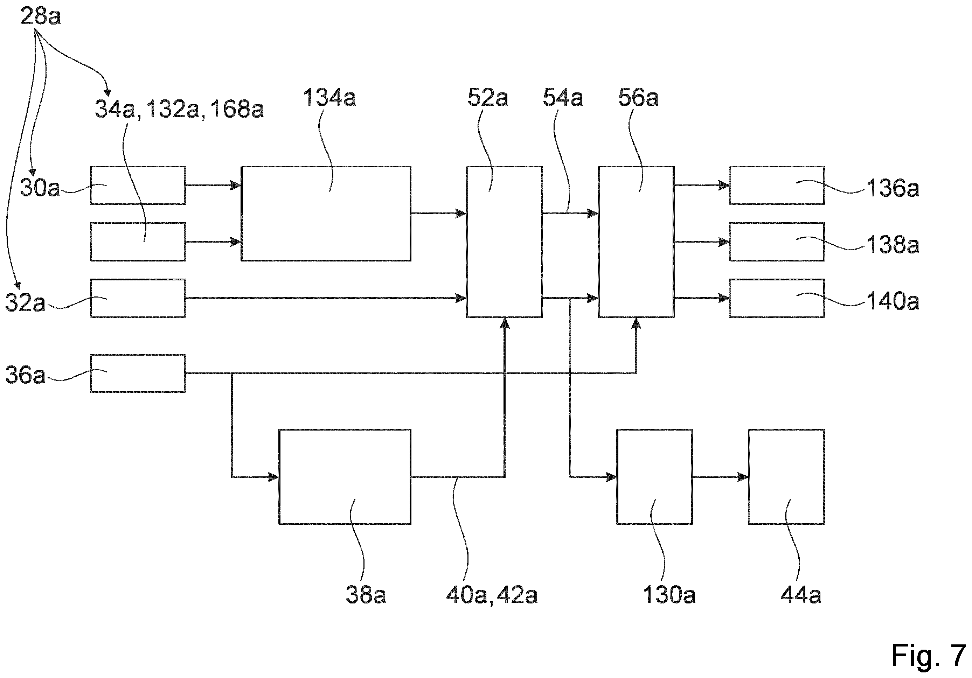

Das Induktionsenergieübertragungssystem 10a weist eine Steuereinheit 18a zur Steuerung der Versorgungseinheit 14a auf. Die Steuereinheit 18a ist dazu vorgesehen, zur Steuerung der Versorgungseinheit 14a einen Parametersatz 28 (vgl. Figur 7) heranzuziehen und zumindest einen Parameter 32a (vgl. Figur 7) des Parametersatzes 28a von der Aufstelleinheit 20a zu empfangen.

Das Induktionsenergieübertragungssystem 10a weist eine Kommunikationseinheit 90a auf. Die Kommunikationseinheit 90a ist zu einer drahtlosen Datenübertragung zwischen der Aufstelleinheit 20a und der Steuereinheit 18a vorgesehen. Vorliegend ist die Kommunikationseinheit 90a außerdem auch zu einer drahtlosen Datenübertragung zwischen der weiteren Aufstelleinheit 22a und der Steuereinheit 18a vorgesehen. Die Kommunikationseinheit 90a weist ein Kommunikationselement 92a auf, welches mit der Steuereinheit 18a verbunden und zu einem drahtlosen Senden und Empfangen von Daten vorgesehen ist. Die Kommunikationseinheit 90a weist ein weiteres Kommunikationselement 94a auf, welches in der Aufstelleinheit 20a angeordnet und zu einem drahtlosen Senden und Empfangen von Daten vorgesehen ist. Die Kommunikationseinheit 90a weist außerdem ein weiteres Kommunikationselement 96a auf, welches in der weiteren Aufstelleinheit 22a angeordnet und zu einem drahtlosen Senden und Empfangen von Daten vorgesehen ist. Vorliegend ist die Kommunikationseinheit 90a als eine NFC-Kommunikationseinheit ausgebildet und zu einer drahtlosen Datenübertragung per NFC zwischen der Steuereinheit 18a und der Aufstelleinheit 20a und/oder der weiteren Aufstelleinheit 22a vorgesehen.

Die folgende Beschreibung der Funktionsweise des Induktionsenergieübertragungssystems 10a erfolgt anhand der Aufstelleinheit 20a, wobei getroffene Aussagen sinngemäß auch auf die weitere Aufstelleinheit 22a übertragen werden können.

Die Steuereinheit 18a ist dazu vorgesehen, zusätzlich einen Informationsparametersatz 36a (vgl. Figur 7) von der Aufstelleinheit 20a und/oder der weiteren Aufstelleinheit 22a zu empfangen, diesen zur Bestimmung von Koeffizienten 38a (vgl. Figur 7) zumindest einer multivariablen Regressionsgleichung heranzuziehen und daraus zumindest einen Korrekturfaktor 40a, 42a für zumindest einen Parameter 30a, 32a, 34a des Parametersatzes 28a oder einen neuen Parametersatz 44a zu bestimmen.

Der Empfang des zumindest einen Parameters 32a des Parametersatzes 28a sowie der Empfang des Informationsparametersatzes 36a durch die Steuereinheit 18a erfolgt vorliegend mittels der Kommunikationseinheit 90a.

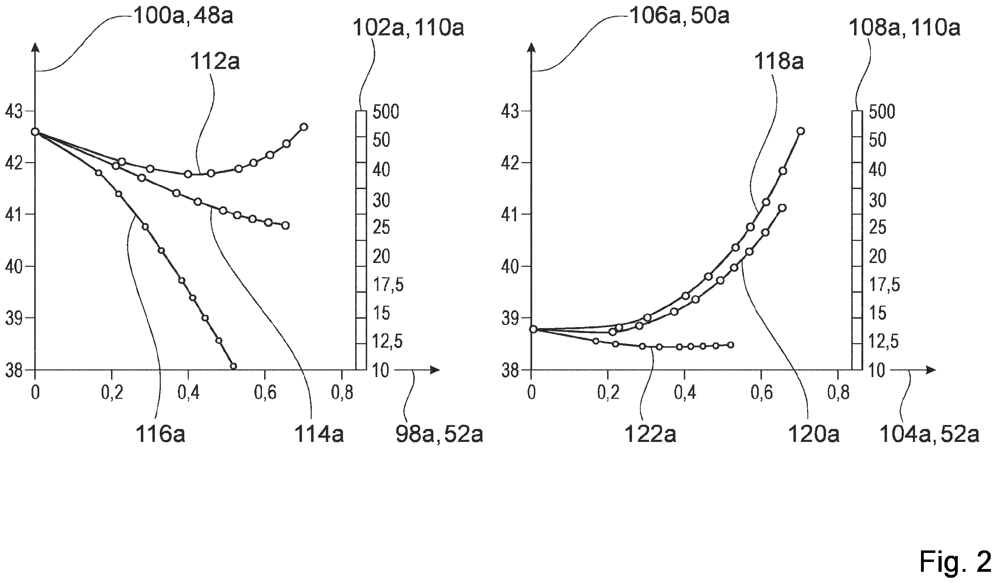

Figur 2 zeigt zwei schematische Diagramme zur Darstellung von Einflussgrößen auf die Eigeninduktivitäten des Versorgungsinduktionselements 16a und des Aufnahmeinduktionselements 26a in einem Betriebszustand des Induktionsenergieübertragungssystems 10a.

Ein linkes Diagramm der Figur 2 zeigt einen Verlauf einer Eigeninduktivität 48a des Versorgungsinduktionselements 16a in Abhängigkeit verschiedener Einflussgrößen.

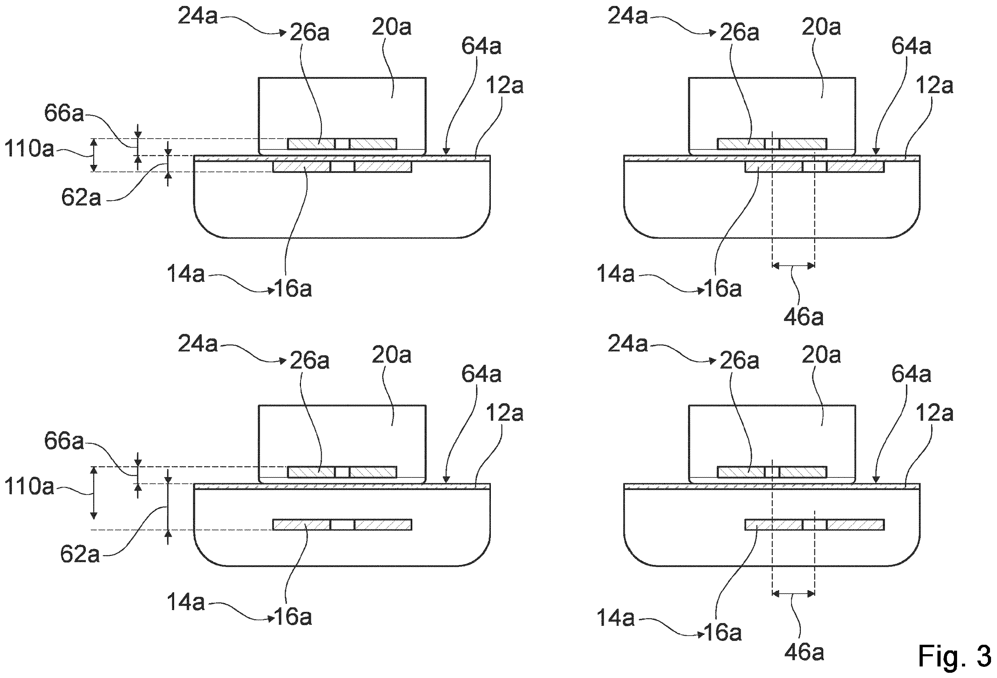

Auf einer Abszisse 98a des linken Diagramms der Figur 2 ist ein Koppelfaktor 52a zwischen dem Versorgungsinduktionselement 16a und dem Aufnahmeinduktionselement 26a als dimensionslose Kenngröße aufgetragen. Auf einer linken Ordinate 100a des linken Diagramms ist die Eigeninduktivität 48a des Versorgungsinduktionselements 16a in µH aufgetragen. Auf einer rechten Ordinate 102a des linken Diagramms ist ein Abstand 110a (vgl. auch Figur 3) zwischen dem Versorgungsinduktionselement 16a und dem Aufnahmeinduktionselement 26a in mm aufgetragen. Eine erste Messreihe 112a in dem linken Diagramm zeigt den Verlauf der Eigeninduktivität 48a des Versorgungsinduktionselements 16a und des Koppelfaktors 52a in Abhängigkeit des Abstands 110a ohne einen horizontalen Versatz 46a (vgl. Figur 3) zwischen dem Versorgungsinduktionselement 16a und dem Aufnahmeinduktionselement 26a. Eine zweite Messreihe 114a in dem linken Diagramm zeigt den Verlauf der Eigeninduktivität 48a des Versorgungsinduktionselements 16a und des Koppelfaktors 52a in Abhängigkeit des Abstands 110a bei einem horizontalen Versatz 46a von 20 mm zwischen dem Versorgungsinduktionselement 16a und dem Aufnahmeinduktionselement 26a. Eine dritte Messreihe 116a in dem linken Diagramm zeigt den Verlauf der Eigeninduktivität 48a des Versorgungsinduktionselements 16a und des Koppelfaktors 52a in Abhängigkeit des Abstands 110a bei einem horizontalen Versatz 46a von 40 mm zwischen dem Versorgungsinduktionselement 16a und dem Aufnahmeinduktionselement 26a.

Auf einer Abszisse 104a eines rechten Diagramms der Figur 2 ist der Koppelfaktor 52a zwischen dem Versorgungsinduktionselement 16a und dem Aufnahmeinduktionselement 26a als dimensionslose Kenngröße aufgetragen. Auf einer linken Ordinate 106a des rechten Diagramms ist eine Eigeninduktivität 50a des Aufnahmeinduktionselements 26a in µH aufgetragen. Auf einer rechten Ordinate 108a des rechten Diagramms ist der Abstand 110a zwischen dem Versorgungsinduktionselement 16a und dem Aufnahmeinduktionselement 26a in mm aufgetragen. Eine erste Messreihe 118a in dem rechten Diagramm zeigt den Verlauf der Eigeninduktivität 50a des Aufnahmeinduktionselements 26a und des Koppelfaktors 52a in Abhängigkeit des Abstands 110a ohne einen horizontalen Versatz 46a zwischen dem Versorgungsinduktionselement 16a und dem Aufnahmeinduktionselement 26a. Eine zweite Messreihe 120a in dem rechten Diagramm zeigt den Verlauf der Eigeninduktivität 50a des Aufnahmeinduktionselements 26a und des Koppelfaktors 52a in Abhängigkeit des Abstands 110a bei einem horizontalen Versatz 46a von 20 mm zwischen dem Versorgungsinduktionselement 16a und dem Aufnahmeinduktionselement 26a. Eine dritte Messreihe 122a in dem linken Diagramm zeigt den Verlauf der Eigeninduktivität 48a des Versorgungsinduktionselements 16a und des Koppelfaktors 52a in Abhängigkeit des Abstands 110a bei einem horizontalen Versatz 46a von 40 mm zwischen dem Versorgungsinduktionselement 16a und dem Aufnahmeinduktionselement 26a.

Wie den Diagrammen der Figur 2 zu entnehmen ist, haben der Abstand 110a und der horizontale Versatz 46a jeweils einen großen Einfluss auf die Eigeninduktivitäten 48a, 50a des Versorgungsinduktionselements 16a und des Aufnahmeinduktionselements 26a, wobei die Eigeninduktivitäten 48a, 50a als Parameter 30a, 32a des Parametersatzes 28a wiederum Einfluss auf die Steuerung der Versorgungseinheit 14a durch die Steuereinheit 18a haben und die Steuerung umso präziser erfolgen kann je genauer die von der Steuereinheit 18a zur Steuerung herangezogenen Werte der Eigeninduktivitäten 48a, 50a mit ihren realen Werten übereinstimmen. Die Steuereinheit 18a ist deshalb dazu vorgesehen, einen Korrekturfaktor 40a (vgl. Figur 7) für die Eigeninduktivität 48a des Versorgungsinduktionselements 16a zu bestimmen. Mittels des Korrekturfaktors 40a berechnet die Steuereinheit 18a eine korrigierte Eigeninduktivität des Versorgungsinduktionselements 16a anhand der nachfolgenden Gleichung (1): ${L}_{pm} = {f}_{prx} {L}_{p}$ (1) wobei in der Gleichung (1) der Ausdruck Lₚₘ für die korrigierte Eigeninduktivität des Versorgungsinduktionselements 16a steht, der Ausdruck fₚᵣₓ für den Korrekturfaktor 40a steht und der Ausdruck Lₚ die Eigeninduktivität 48a des Versorgungsinduktionselements 16a beschreibt, welche als Ausgangswert in einer Speichereinheit (nicht dargestellt) der Steuereinheit 18a als Parameter 30a des Parametersatzes 28a (vgl. Figur 7) gespeichert ist.

Die Steuereinheit 18a ist ferner dazu vorgesehen, einen Korrekturfaktor 42a für die Eigeninduktivität 50a des Aufnahmeinduktionselements 26a zu bestimmen. Mittels des Korrekturfaktors 42a berechnet die Steuereinheit 18a eine korrigierte Eigeninduktivität des Aufnahmeinduktionselements 26a anhand der nachfolgenden Gleichung (2): ${L}_{sm} = {f}_{stx} {L}_{s}$ (2) wobei in der Gleichung (2) der Ausdruck Lₛₘ für die korrigierte Eigeninduktivität des Aufnahmeinduktionselements 26a steht, der Ausdruck fₛₜₓ für den Korrekturfaktor 42a steht und der Ausdruck Lₛ die Eigeninduktivität 50a des Aufnahmeinduktionselements 26a beschreibt, welche durch die Steuereinheit 18a als Parameter 32a von der Aufstelleinheit 20a empfangen wird, und zwar drahtlos mittels der Kommunikationseinheit 90a.

Die Bestimmung der Korrekturfaktoren 40a, 42a durch die Steuereinheit 18a wird später anhand der Figur 7 noch ausführlicher beschrieben.

Figur 3 zeigt vier schematische Darstellungen von möglichen Anordnungen zwischen dem Versorgungsinduktionselement 16a der Versorgungseinheit 14a und dem Aufnahmeinduktionselement 26a der Aufnahmeeinheit 24a.

Die Steuereinheit 18a ist dazu vorgesehen, bei der Bestimmung des neuen Parametersatzes 44a den horizontalen Versatz 46a zwischen dem Versorgungsinduktionselement 16a und dem Aufnahmeinduktionselement 26a zu berücksichtigen.

In einer linken oberen Darstellung der Figur 3 ist ein erster Fall dargestellt, in welchem die Aufstelleinheit 20a derart auf der Aufstellplatte 12a aufgestellt ist, dass kein horizontaler Versatz 46a vorhanden ist. In einer rechten oberen Darstellung der Figur 3 ist ein zweiter Fall dargestellt, in welchem die Aufstelleinheit 20a derart auf der Aufstellplatte 12a aufgestellt ist, dass ein horizontaler Versatz 46a vorhanden ist, wobei der horizontale Versatz 46a vorliegend 40 mm beträgt.

Die Steuereinheit 18a ist dazu vorgesehen, bei der Bestimmung der Koeffizienten 38a der multivariablen Regressionsgleichung einen vertikalen Abstand 62a zwischen dem Versorgungsinduktionselement 16a und einer Oberseite 64a der Aufstellplatte 12a heranzuziehen. Der vertikale Abstand 62a ist in der Speichereinheit der Steuereinheit 18a gespeichert. In den beiden oberen Darstellungen der Figur 3 ist jeweils der Fall dargestellt, dass die Aufstellplatte 12a, wie in der Figur 1 gezeigt, als eine Kochfeldplatte 58a ausgebildet ist. In diesen, den beiden oberen Darstellungen der Figur 3 entsprechenden, Fällen beträgt der vertikale Abstand 62a zwischen dem Versorgungsinduktionselement 16a und der Oberseite 64a der Aufstellplatte 12a vorliegend 4 mm.

Der Informationsparametersatz 36a beinhaltet einen vertikalen Abstand 66a zwischen dem Aufnahmeinduktionselement 26a und der Oberseite 64a der Aufstellplatte 12a. Der vertikale Abstand 66a wird von der Steuereinheit 18a als Teil des Informationsparametersatzes 36a von der Aufstelleinheit 20a empfangen, und zwar drahtlos mittels der Kommunikationseinheit 90a. Vorliegend weist der vertikale Abstand 66a zwischen dem Aufnahmeinduktionselement 26a und der Oberseite 64a der Aufstellplatte 12a einen Wert von 6 mm auf.

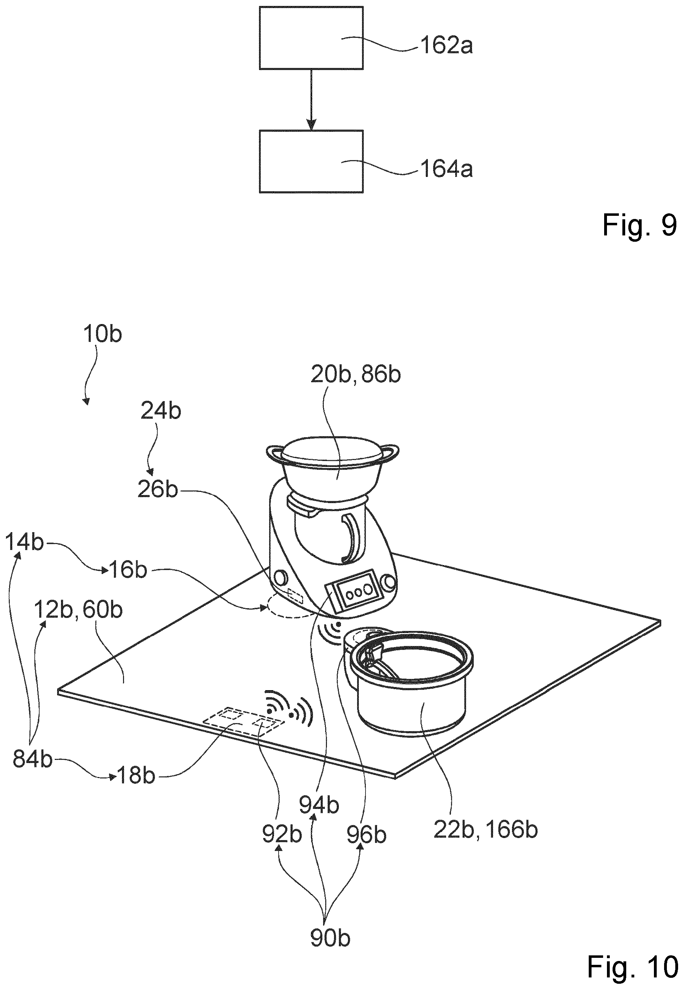

In zwei unteren Darstellungen der Figur 3 sind unten links ein dritter und unten rechts ein vierter Fall dargestellt, in welchen das Versorgungsinduktionselement 16a jeweils einen größeren vertikalen Abstand 62a zu der Oberseite 64a der Aufstellplatte 12a aufweist, wobei dieser vertikale Abstand 62a in der Speichereinheit der Steuereinheit 18a gespeichert ist und für den dritten und vierten Fall jeweils 24 mm beträgt. Der dritte und vierte Fall könnte beispielsweise einer Situation entsprechen, in welchem die Aufstellplatte 12a nicht als Kochfeldplatte 58a, sondern, wie in einem weiteren Ausführungsbeispiel eines in der Figur 10 gezeigten Induktionsenergieübertragungssystems 10b, als eine Küchenarbeitsplatte 60b ausgebildet ist.

In dem Betriebszustand des Induktionsenergieübertragungssystems 10a bestimmt die Steuereinheit 18a jeweils den Abstand 110a aus der Summe der vertikalen Abstände 62a, 66a, und zwar für alle vier in der Figur 3 gezeigten Fälle, wobei der Abstand 110a in dem ersten und zweiten Fall vorliegend jeweils 10 mm und in dem dritten und vierten Fall jeweils 30 mm beträgt.

In der linken unteren Darstellung der Figur 3 ist die Aufstelleinheit 20a wiederum derart auf der Aufstellplatte 12a aufgestellt, dass kein horizontaler Versatz 46a vorhanden ist. In der rechten unteren Darstellung der Figur 3 ist die Aufstelleinheit 20a wieder derart auf der Aufstellplatte 12a aufgestellt, dass ein horizontaler Versatz 46a von 40 mm vorhanden ist.

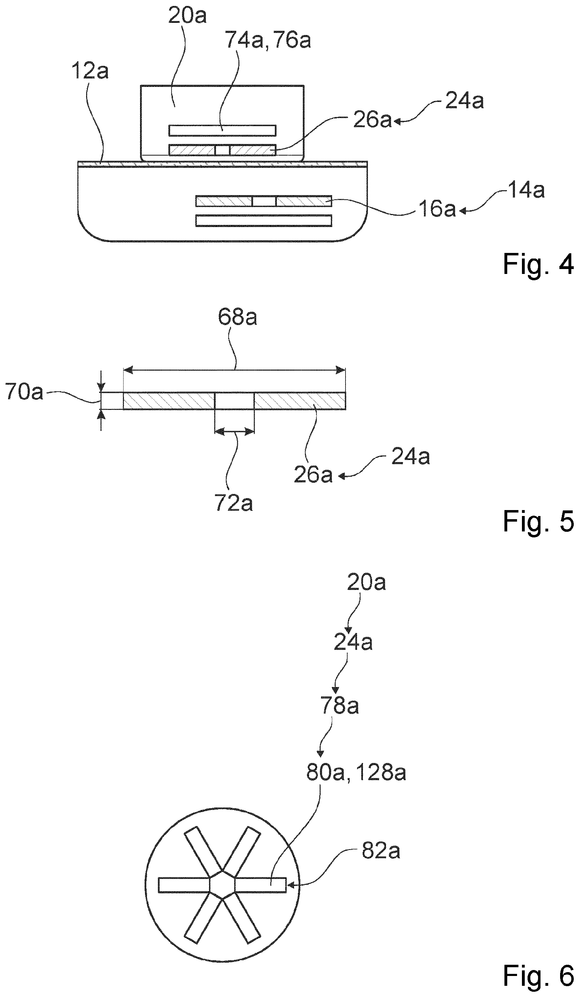

Figur 4 zeigt das Aufnahmeinduktionselement 26a der Aufnahmeeinheit 24a und das Versorgungsinduktionselement 16a der Versorgungseinheit 14a in einer schematischen Darstellung.

Die Aufstelleinheit 20a weist eine Abschirmeinheit 74a auf. Der Informationsparametersatz 36a umfasst zumindest einen die Abschirmeinheit 74a betreffenden Informationsparameter 76a. Vorliegend beinhaltet der Informationsparameter 76a eine Information über ein Material der Abschirmeinheit 74a. Die Abschirmeinheit 74a ist in dem vorliegenden Ausführungsbeispiel aus Aluminium ausgebildet.

Figur 5 zeigt die Aufnahmeeinheit 24a in einer schematischen Darstellung.

Der Informationsparametersatz 36a umfasst zumindest einen geometrischen Informationsparameter 68a des Aufnahmeinduktionselements 26a. Vorliegend handelt es sich bei dem geometrischen Informationsparameter 68a um einen Außendurchmesser des Aufnahmeinduktionselements 26a. Der Informationsparametersatz 36a umfasst zudem weitere geometrische Informationsparameter 70a, 72a des Aufnahmeinduktionselements 26a. Bei dem weiteren geometrischen Informationsparameter 70a handelt es sich vorliegend um eine Dicke des Aufnahmeinduktionselements 26a. Bei dem weiteren geometrischen Informationsparameter 72a handelt es sich vorliegend um einen Innendurchmesser des Aufnahmeinduktionselements 26a.

Die Aufnahmeeinheit 24a weist eine Flussbündelungseinheit 78a auf. Die Flussbündelungseinheit 78a ist in der Figur 6 schematisch dargestellt. Der Informationsparametersatz 36a umfasst zumindest einen die Flussbündelungseinheit 78a betreffenden Informationsparameter 80a. Vorliegend handelt es sich bei dem Informationsparameter 80a um eine Anzahl von Ferriten 128a der Flussbündelungseinheit 78a, welche in dem vorliegenden Ausführungsbeispiel sechs beträgt. Der Informationsparametersatz 36a umfasst vorliegend zudem einen die Flussbündelungseinheit 78a betreffenden weiteren Informationsparameter 82a. Bei dem die Flussbündelungseinheit 78a betreffenden weiteren Informationsparameter 82a handelt es sich vorliegend um eine Position der Ferrite 128a.

Figur 7 zeigt ein schematisches Blockschaltbild zur Darstellung einer Funktionsweise der Steuereinheit 18a. Die Steuereinheit 18a ist dazu vorgesehen, zur Steuerung der Versorgungseinheit 14a den Parametersatz 28a heranzuziehen. Der Parametersatz 28a umfasst eine Vielzahl von Parametern 30a, 32a, 34a, wobei die Steuereinheit 18a dazu vorgesehen ist, zumindest einen Paramater 32a, vorliegend die Eigeninduktivität 50a des Aufnahmeinduktionselements 26a von der Aufstelleinheit 20a zu empfangen. Außerdem beinhaltet der Parametersatz 28a den Parameter 30a, welcher in der Speichereinheit gespeichert ist, wobei es sich bei dem Parameter 30a vorliegend um die Eigeninduktivität 48a des Versorgungsinduktionselements 16a handelt, Ferner umfasst der Parametersatz 28a zumindest einen Parameter 34a, welcher durch die Steuereinheit 18a in einem Betriebszustand der Versorgungseinheit 14a gemessen wird. Bei dem Paramater 34a handelt es sich vorliegend beispielsweise um eine mittlere Stromstärke, mit welcher das Versorgungsinduktionselement 16a in dem Betriebszustand betrieben wird. Vorliegend umfasst der Parametersatz 28a zumindest einen weiteren Parameter 132a, welcher in dem Betriebszustand der Versorgungseinheit 14a gemessen wird, wobei es sich bei dem weiteren Parameter 132a vorliegend um eine mittlere elektrische Leistung zum Betrieb des Versorgungsinduktionselements 16a handelt. Die Steuereinheit 18a ist dazu vorgesehen, aus dem Parameter 34a und dem weiteren Parameter 132a einen Ersatzwiderstand 134a zwischen der Versorgungseinheit 14a und der Aufnahmeeinheit 24a zu bestimmen, und zwar anhand der nachfolgenden Gleichung (3): ${R}_{eq} = \frac{{P}_{avg}}{{{I}_{rms}}^{2}}$ (3) wobei in der Gleichung (3) der Ausdruck R_{eq} für den Ersatzwiderstand 134a, der Ausdruck P_{avg} für die als weiterer Parameter 132a ermittelte mittlere elektrische Leistung und der Ausdruck Iᵣₘₛ für die als Parameter 34a ermittelte mittlere Stromstärke stehen.

Nachfolgend ist eine multivariable Regressionsgleichung (4) aufgeführt, anhand derer die Steuereinheit 18a den Korrekturfaktor 40a bestimmt: ${f}_{prx} = {e}^{{c}_{7} {k}^{2} - {c}_{8} k - {c}_{9} {a}^{2} {k}^{2}}$ (4) wobei in der multivariablen Regressionsgleichung (4) der Ausdruck fₚᵣₓ für den Korrekturfaktor 40a steht, der Ausdruck e für die eulersche Zahl und der Ausdruck k für den Koppelfaktor 52a. Die Ausdrücke c₇, c₈ und c₉ stehen jeweils für einen Koeffizienten 38a7, 38a8, 38a9 der multivariablen Regressionsgleichung (4), welche die Steuereinheit 18a aus dem Informationsparametersatz 36a bestimmt oder welche als konkrete Werte in dem Informationsparametersatz 36a enthalten sind.

Nachfolgend ist eine weitere multivariable Regressionsgleichung (5) aufgeführt, anhand derer die Steuereinheit 18a den Korrekturfaktor 42a bestimmt: ${f}_{stx} = {e}^{{c}_{4} {k}^{2} - {c}_{5} k - {c}_{6} {a}^{2} {k}^{2}}$ (5) wobei in der multivariablen Regressionsgleichung (5) der Ausdruck fₛₜₓ wiederum für den Korrekturfaktor 42a, der Ausdruck k wiederum für den Koppelfaktor 52a und der Ausdruck e wiederum für die eulersche Zahl steht. Die Ausdrücke c₄, c₅ und c₆ stehen jeweils für einen Koeffizienten 38a4, 38a5, 38a6 der multivariablen Regressionsgleichung (5), welche die Steuereinheit 18a aus dem Informationsparametersatz 36a bestimmt oder welche als konkrete Werte in dem Informationsparametersatz 36a enthalten sind.

Nachfolgend ist eine Gleichung (6) angegeben, mittels derer die Steuereinheit bei der Bestimmung des neuen Parametersatzes 44a unter Berücksichtigung des horizontalen Versatzes 46a zwischen dem Versorgungsinduktionselement 16a und dem Aufnahmeinduktionselement 26a eine Ausrichtung 130a zwischen dem Versorgungsinduktionselement 16a und dem Aufnahmeinduktionselement 26a bestimmt: $a = \sqrt{\frac{ln \left(\frac{k}{{c}_{1}}\right) - {c}_{2} ⋅ d}{{c}_{3}}}$ (6) wobei in der Gleichung (6) der Ausdruck a für die Ausrichtung 130a, der Ausdruck In für den natürlichen Logarithmus, der Ausdruck k wiederum für den Koppelfaktor 52a und der Ausdruck d für den Abstand 110a zwischen dem Aufnahmeinduktionselement 26a und dem Versorgungsinduktionselement 16a steht. Die Ausdrücke c₁, c₂ und c₃ stehen jeweils für einen Koeffizienten 38a1, 38a2, 38a3 der Gleichung (6), welche die Steuereinheit 18a aus dem Informationsparametersatz 36a bestimmt oder welche als konkrete Werte in dem Informationsparametersatz 36a enthalten sind.

Den Koeffizienten 38a1 bestimmt die Steuereinheit 18a anhand der nachfolgenden Gleichung (7): ${c}_{1} = \frac{{k}_{1}}{{e}^{{c}_{2} {d}_{1}}}$ (7) wobei in der Gleichung (7) der Ausdruck c₁ wiederum für den Koeffizienten 38a1, der Ausdruck c₂ für den Koeffizienten 38a2 und der Ausdruck e für die eulersche Zahl stehen.

Der Ausdruck k₁ steht für den Koppelfaktor 52a und der Ausdruck d₁ für den Abstand 110a zwischen dem Aufnahmeinduktionselement 26a und dem Versorgungsinduktionselement 16a, wobei der Index 1 jeweils für den in der Figur 3 oben links dargestellten ersten Fall steht. Für jeden der in der Figur 3 gezeigten Fälle ist in der Aufstelleinheit 20a jeweils ein Wert für den Kopplungsfaktor 52a, die Eigeninduktivität 48a des Versorgungsinduktionselements 16a und die Eigeninduktivität 50a gespeichert, wobei diese Werte in standardisierten Tests ermittelt wurden, welche unter Bedingungen durchgeführt wurden, die den in der Figur 3 gezeigten Fällen entsprechen und die Steuereinheit 18a diese Werte in dem Betriebszustand des Induktionsenergieübertragungssystems 10a als Bestandteile des Informationsparametersatzes 36a von der Aufstelleinheit 20a empfängt und zur Bestimmung der Koeffizienten 38a heranzieht.

Den Koeffizienten 38a2 bestimmt die Steuereinheit 18a anhand der nachfolgenden Gleichung (8): ${c}_{2} = \frac{ln \left(\frac{{k}_{1}}{{k}_{3}}\right)}{\left({d}_{1}-{d}_{3}\right)}$ (8) wobei in der Gleichung (8) der Ausdruck c₂ wiederum für den Koeffizienten 38a2 und der Ausdruck In für den natürlichen Logarithmus stehen. Der Ausdruck k steht wiederum für den Koppelfaktor 52a und der Ausdruck d für den Abstand 110a zwischen dem Aufnahmeinduktionselement 26a und dem Versorgungsinduktionselement 16a, wobei der Index 1 wiederum jeweils für den in der Figur 3 oben links dargestellten ersten Fall steht und der Index 3 für den in der Figur 3 unten links dargestellten dritten Fall.

Den Koeffizienten 38a3 bestimmt die Steuereinheit 18a anhand der nachfolgenden Gleichung (9): ${c}_{3} = \frac{\left(ln\left(\frac{{k}_{2 , 4}}{{c}_{1}}\right)-{c}_{2}{d}_{2 , 4}\right)}{{{a}_{2 , 4}}^{2}}$ (9) wobei in der Gleichung (9) der Ausdruck c₂ wiederum für den Koeffizienten 38a2 und der Ausdruck c₃ wiederum für den Koeffizienten 38a3 stehen und der Ausdruck In wiederum den natürlichen Logarithmus bezeichnet. Der Ausdruck a steht auch in der Gleichung 9 für die Ausrichtung 130a, der Ausdruck k steht wiederum für den Koppelfaktor 52a und der Ausdruck d wiederum für den Abstand 110a zwischen dem Aufnahmeinduktionselement 26a und dem Versorgungsinduktionselement 16a, wobei der Index 2 jeweils für den in der Figur 3 oben rechts dargestellten zweiten Fall steht und der Index 4 für den in der Figur 3 unten rechts dargestellten vierten Fall stehen. Anhand des in der Speichereinheit gespeicherten Werts für den horizontalen Abstand 62a bestimmt die Steuereinheit 18a, ob der zweite oder der vierte Fall vorliegt und wählt zu der Bestimmung des Koeffizienten 38a3 die entsprechenden Werte für die Ausrichtung 130a, den Koppelfaktor 52a und den Abstand 110a aus dem Informationsparametersatz aus.

Den Koeffizienten 38a4 bestimmt die Steuereinheit 18a anhand der nachfolgenden Gleichung (10): ${c}_{4} = \frac{\left(ln\left({f}_{stx 1 , 3}\right)+{c}_{5}{k}_{1 , 3}\right)}{{{k}_{1 , 3}}^{2}}$ (10) wobei in der Gleichung (10) der Ausdruck c₄ wiederum für den Koeffizienten 38a4 und der Ausdruck c₅ wiederum für den Koeffizienten 38a5 stehen und der Ausdruck In wiederum den natürlichen Logarithmus bezeichnet. Der Ausdruck fₛₜₓ steht in der Gleichung (10) wiederum für den Korrekturfaktor 42a und der Ausdruck k wiederum für den Koppelfaktor 52a, wobei der Index 1 wiederum jeweils für den in der Figur 3 oben links dargestellten ersten Fall steht und der Index 3 für den in der Figur 3 unten links dargestellten dritten Fall. Werte für den Korrekturfaktor 42a für die in der Figur 3 dargestellten vier Fälle sind jeweils in dem Informationsparametersatz 36a enthalten.

Die Koeffizienten 38a5 und 38a8 sind vorliegend konstant und weisen jeweils den in der Gleichung (11) dargestellten Wert auf: ${c}_{5 , 8} = - 0.1$ (11)

In der Gleichung (11) stehen die Ausdrücke c_{5,8} wiederum für die Koeffizienten 38a5 und 38a8, wobei der genannte Wert dieser Koeffizienten in dem Informationsparametersatz 36a enthalten ist.

Den Koeffizienten 38a6 bestimmt die Steuereinheit 18a anhand der nachfolgenden Gleichung (12): ${c}_{6} = \frac{\left(ln\left({f}_{stx 2 , 4}\right)-{c}_{4}{{k}_{2 , 4}}^{2}+{c}_{5}{k}_{2 , 4}\right)}{\left({{k}_{2 , 4}}^{2}{{a}_{2 , 4}}^{2}\right)}$ (12) wobei in der Gleichung (12) der Ausdruck c₄ wiederum für den Koeffizienten 38a4, der Ausdruck c₅ wiederum für den Koeffizienten 38a5 und der Ausdruck c₆ wiederum für den Koeffizienten 38a6 stehen. Der Ausdruck In bezeichnet auch in der Gleichung (12) den natürlichen Logarithmus. Der Ausdruck fₛₜₓ steht in der Gleichung (12) wiederum für den Korrekturfaktor 42a, der Ausdruck k wiederum für den Koppelfaktor 52a und der Ausdruck a für die Ausrichtung 130a, wobei der Index 2 wiederum jeweils für den jeweils für den in der Figur 3 oben rechts dargestellten zweiten Fall steht und der Index 4 für den in der Figur 3 unten rechts dargestellten vierten Fall.

Den Koeffizienten 38a7 bestimmt die Steuereinheit 18a anhand der nachfolgenden Gleichung (13): ${c}_{7} = \frac{\left(ln\left({f}_{prx 1 , 3}\right)+{c}_{8}{k}_{1 , 3}\right)}{{{k}_{1 , 3}}^{2}}$ (13) wobei in der Gleichung (13) der Ausdruck c₇ wiederum für den Koeffizienten 38a7 und der Ausdruck c₈ wiederum für den Koeffizienten 38a8 stehen und der Ausdruck In wiederum den natürlichen Logarithmus bezeichnet. Der Ausdruck fₚᵣₓ steht auch in der Gleichung (13) wiederum für den Korrekturfaktor 40a und der Ausdruck k wiederum für den Koppelfaktor 52a, wobei der Index 1 wiederum jeweils für den in der Figur 3 oben links dargestellten ersten Fall steht und der Index 3 für den in der Figur 3 unten links dargestellten dritten Fall. Werte für den Korrekturfaktor 40a für die in der Figur 3 dargestellten vier Fälle sind wiederum jeweils in dem Informationsparametersatz 36a enthalten.

Den Koeffizienten 38a9 bestimmt die Steuereinheit 18a anhand der nachfolgenden Gleichung (14): ${c}_{9} = \frac{\left(ln\left({f}_{prx 2 , 4}\right)-{c}_{7}{{k}_{2 , 4}}^{2}+{c}_{8}{k}_{2 , 4}\right)}{\left({{k}_{2 , 4}}^{2}{{a}_{2 , 4}}^{2}\right)}$ (14) wobei in der Gleichung (14) der Ausdruck c₇ wiederum für den Koeffizienten 38a7, der Ausdruck c₈ wiederum für den Koeffizienten 38a8 und der Ausdruck c₉ für den Koeffizienten 38a9 stehen. Der Ausdruck In bezeichnet auch in der Gleichung (14) den natürlichen Logarithmus. Der Ausdruck fₚᵣₓ steht in der Gleichung (14) wiederum für den Korrekturfaktor 40a, der Ausdruck k wiederum für den Koppelfaktor 52a und der Ausdruck a für die Ausrichtung 130a, wobei der Index 2 wiederum jeweils für den in der Figur 3 oben rechts dargestellten zweiten Fall steht und der Index 4 jeweils für den in der Figur 3 unten rechts dargestellten vierten Fall.

Zwischen dem Koppelfaktor 52a, der Eigeninduktivität 48a des Versorgungsinduktionselements 16a, der Eigeninduktivität 50a des Aufnahmeinduktionselements 26a und einer Gegeninduktivität zwischen dem Versorgungsinduktionselement 16a und dem Aufnahmeinduktionselement 26a in dem Betriebszustand des Induktionsenergieübertragungssystems 10a besteht der folgende in Gleichung (15) beschriebene allgemeine Zusammenhang: ${L}_{g} = k \sqrt{{L}_{sm} {L}_{pm}} .$ (15) wobei in der Gleichung (15) der Ausdruck L_{g} für die Gegeninduktivität, der Ausdruck k wiederum für den Koppelfaktor 52a, der Ausdruck Lₛₘ für die korrigierte Eigeninduktivität des Aufnahmeinduktionselements 26a und der Ausdruck Lₚₘ für die korrigierte Eigeninduktivität des Versorgungsinduktionselements 16a stehen.

Die Steuereinheit 18a ist dazu vorgesehen, einen Korrekturfaktor 54a für einen Lastwiderstand 56a der Aufstelleinheit 20a zu bestimmen. Zur Bestimmung des Korrekturfaktors 54a für den Lastwiderstand 56a ist die Steuereinheit 18a dazu vorgesehen, zunächst den Lastwiderstand 56a anhand der folgenden Gleichung (16) zu bestimmen: ${R}_{eq} = \frac{{ω}^{2} {L}_{g}^{2} {R}_{load}}{{R}_{load}^{2} + {\left({ωL}_{sm}-\frac{1}{{ωC}_{2}}\right)}^{2}} ,$ (16)

In der Gleichung (16) steht der Ausdruck R_{eq} wiederum für den Ersatzwiderstand 134a, L_{g} für die Gegeninduktivität, R_{load} für den Lastwiderstand 56a, Lₛₘ für die korrigierte Eigeninduktivität des Aufnahmeinduktionselements 26a, ω für die Kreisfrequenz und C₂ für eine Kapazität eines Kompensationskondensators (nicht dargestellt), welcher mit dem Aufnahmeinduktionselement 26a verbunden ist, wobei die Kapazität des Kompensationskondensators in dem Informationsparametersatz 36a enthalten ist. Für die Kreisfrequenz ω gilt: $ω = 2 πf$ (17) wobei in der Gleichung (17) π für die Kreiszahl und f für eine Frequenz eines Wechselstroms, mit welchem die Steuereinheit 18a das Versorgungsinduktionselement 16a betreibt, steht.

Die Steuereinheit 18a ist dazu vorgesehen, einen Wert für den Lastwiderstand 56a durch Gleichsetzen der Gleichung (16) mit dem Anhand der Gleichung (3) bestimmten Wert für den Ersatzwiderstand 134a und durch Auflösen nach R_{load} zu bestimmen.

Vorliegend umfasst der Parametersatz 28a zumindest einen weiteren Parameter 168a, welcher in dem Betriebszustand der Versorgungseinheit 14a gemessen wird, wobei es sich bei dem weiteren Parameter 168a vorliegend um eine Ersatzinduktivität der Aufstelleinheit 20a handelt. Die Steuereinheit 18a ist dazu vorgesehen, zur Bestimmung des Korrekturfaktors 54a für den Lastwiderstand 56a den Koppelfaktor 52a anhand der folgenden Gleichung (18) zu bestimmen: ${k}_{{L}_{eq}} = \sqrt{\frac{\left({L}_{pm}-{L}_{eq}\right) \left({R}_{load}^{2}+{\left({ωL}_{sm}-\frac{1}{{ωC}_{2}}\right)}^{2}\right)}{{ωL}_{pm} {L}_{sm} \left({ωL}_{sm}-\frac{1}{{ωC}_{2}}\right)}} .$ (18) wobei in der Gleichung (18) k_{Leq} für den Koppelfaktor 52a in Abhängigkeit der Ersatzinduktivität der Aufstelleinheit 20a, Lₚₘ für die korrigierte Eigeninduktivität des Versorgungsinduktionselements 16a, L_{eq} für die Ersatzinduktivität der Aufstelleinheit 20a, R_{load} für den Lastwiderstand 56a, Lₛₘ für die korrigierte Eigeninduktivität des Aufnahmeinduktionselements 26a, ω für die Kreisfrequenz und C₂ für die Kapazität des mit dem Aufnahmeinduktionselement 26a verbundenen Kompensationskondensators stehen.

Die Steuereinheit 18a ist dazu vorgesehen, zur Bestimmung des Korrekturfaktors 54a für den Lastwiderstand 56a die folgende Gleichung (19) heranzuziehen: ${k}_{{R}_{eq}} = \sqrt{\frac{{R}_{eq} \left({R}_{load}^{2}+{\left({ωL}_{sm}-\frac{1}{{ωC}_{2}}\right)}^{2}\right)}{{ω}^{2} {L}_{pm} {L}_{sm} {R}_{load}}} ,$ (19) wobei in der Gleichung (18) k_{Req} für den Koppelfaktor 52a in Abhängigkeit des Ersatzwiderstands 134a der Aufstelleinheit 20a, Lₚₘ für die korrigierte Eigeninduktivität des Versorgungsinduktionselements 16a, L_{eq} für die Ersatzinduktivität der Aufstelleinheit 20a, R_{load} für den Lastwiderstand 56a, Lₛₘ für die korrigierte Eigeninduktivität des Aufnahmeinduktionselements 26a, ω für die Kreisfrequenz und C₂ für die Kapazität des mit dem Aufnahmeinduktionselement 26a verbundenen Kompensationskondensators stehen.

Die Steuereinheit 18a ist dazu vorgesehen, die Gleichung (19) mit dem anhand der Gleichung (18) bestimmten Wert des Koppelfaktors 52a gleichzusetzen und nach R_{load} aufzulösen. Zur Bestimmung des Korrekturfaktors 54a für den Lastwiderstand 56a ist die Steuereinheit 18a dazu vorgesehen, den mittels der Gleichungen (3) und (16) bestimmten Wert des Lastwiderstands 56a mit dem mittels der Gleichungen (18) und (19) bestimmten Wert des Lastwiderstands 56a zu vergleichen und daraus den Korrekturfaktor 54a zu berechnen. Die Steuereinheit 18a ist ferner dazu vorgesehen, anhand des so bestimmten korrigierten Lastwiderstands 56a eine Frequenz 136a und/oder einen Tastgrad 138a und/oder einen Burstmodus 140a zu bestimmen, um damit das Versorgungsinduktionselement 16a zu betreiben.

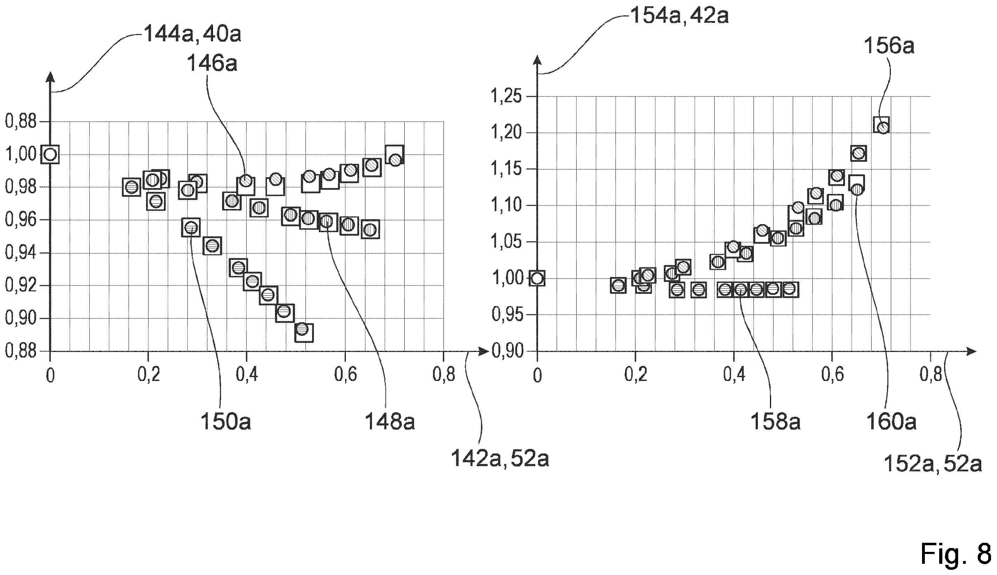

Figur 8 zeigt zwei schematische Diagramme zur Darstellung der Korrekturfaktoren 40a, 42a. Auf einer Abszisse 142a eines linken Diagramms ist der Koppelfaktor 52a als dimensionslose Kenngröße aufgetragen. Auf einer Ordinate 144a ist der Korrekturfaktor 40a als dimensionslose Kenngröße aufgetragen. Eine erste Messreihe 146a in dem linken Diagramm zeigt den Verlauf des Korrekturfaktors 40a in Abhängigkeit des Koppelfaktors 52a für den Fall, dass kein horizontaler Versatz 46a (vgl. Figur 3) zwischen dem Versorgungsinduktionselement 16a und dem Aufnahmeinduktionselement 26a besteht. Kreisförmig dargestellte Messpunkte der ersten Messreihe 146a stehen jeweils für durch die Steuereinheit 18a bestimmte Korrekturfaktoren 40a. Rechteckig dargestellte Messpunkte der ersten Messreihe 146a stehen jeweils für reale Messwerte, wobei der Korrekturfaktor anhand der nachfolgenden Gleichung (20) berechnet wurde, welche sich durch Umstellen der Gleichung (1) ergibt: ${f}_{prx} = \frac{{L}_{pr}}{{L}_{p}}$ (20) wobei in der Gleichung (20) der Ausdruck fₚᵣₓ wiederum für den Korrekturfaktor 40a und der Ausdruck Lp für die in der Speichereinheit der Steuereinheit 18a gespeicherte Eigeninduktivität 48a des Versorgungsinduktionselements 16a sehen. Der Ausdruck Lₚᵣ in der Gleichung (20) steht für eine in einem Betriebszustand des Induktionsenergieübertragungssystems 10a gemessene Eigeninduktivität des Versorgungsinduktionselements 16a.

Eine zweite Messreihe 148a in dem linken Diagramm zeigt den Verlauf des Korrekturfaktors 40a in Abhängigkeit des Koppelfaktors 52a für den Fall, dass zwischen dem Versorgungsinduktionselement 16a und dem Aufnahmeinduktionselement 26a ein horizontaler Versatz 46a (vgl. Figur 3) von 20 mm besteht. Kreisförmig dargestellte Messpunkte der zweiten Messreihe 146a stehen wiederum jeweils für durch die Steuereinheit 18a bestimmte Korrekturfaktoren 40a. Rechteckig dargestellte Messpunkte der zweiten Messreihe 148a stehen wiederum jeweils für reale Messwerte, aus welchen anhand der obigen Gleichung (20) der Korrekturfaktor 40a berechnet wurde.

Eine dritte Messreihe 150a in dem linken Diagramm zeigt den Verlauf des Korrekturfaktors 40a in Abhängigkeit des Koppelfaktors 52a für den Fall, dass zwischen dem Versorgungsinduktionselement 16a und dem Aufnahmeinduktionselement 26a ein horizontaler Versatz 46a (vgl. Figur 3) von 40 mm besteht. Kreisförmig dargestellte Messpunkte der dritten Messreihe 150a stehen wiederum jeweils für durch die Steuereinheit 18a bestimmte Korrekturfaktoren 40a. Rechteckig dargestellte Messpunkte der dritten Messreihe 150a stehen wiederum jeweils für reale Messwerte, aus welchen anhand der obigen Gleichung (20) der Korrekturfaktor 40a berechnet wurde.

Auf einer Abszisse 152a eines rechten Diagramms der Figur 8 ist der Koppelfaktor 52a als dimensionslose Kenngröße aufgetragen. Auf einer Ordinate 154a des rechten Diagramms ist der Korrekturfaktor 42a als dimensionslose Kenngröße aufgetragen. Eine erste Messreihe 156a in dem rechten Diagramm zeigt den Verlauf des Korrekturfaktors 42a in Abhängigkeit des Koppelfaktors 52a für den Fall, dass kein horizontaler Versatz 46a (vgl. Figur 3) zwischen dem Versorgungsinduktionselement 16a und dem Aufnahmeinduktionselement 26a besteht. Kreisförmig dargestellte Messpunkte der ersten Messreihe 156a stehen jeweils für durch die Steuereinheit 18a bestimmte Korrekturfaktoren 42a. Rechteckig dargestellte Messpunkte der ersten Messreihe 156a stehen jeweils für reale Messwerte, wobei der Korrekturfaktor anhand der nachfolgenden Gleichung (21) berechnet wurde, welche sich durch Umstellen der Gleichung (2) ergibt: ${f}_{stx} = \frac{{L}_{sr}}{{L}_{s}}$ (21) wobei in der Gleichung (21) der Ausdruck fₛₜₓ wiederum für den Korrekturfaktor 42a steht und der Ausdruck Lₛ die Eigeninduktivität 50a des Aufnahmeinduktionselements 26a beschreibt, welche als Parameter 32a von der Aufstelleinheit 20a empfangen wird, und zwar drahtlos mittels der Kommunikationseinheit 90a. Der Ausdruck Lₛᵣ in der Gleichung (21) steht für eine in einem Betriebszustand des Induktionsenergieübertragungssystems 10a gemessene Eigeninduktivität des Aufnahmeinduktionselements 16a.

Eine zweite Messreihe 158a des rechten Diagramms zeigt den Verlauf des Korrekturfaktors 42a in Abhängigkeit des Koppelfaktors 52a für den Fall, dass zwischen dem Versorgungsinduktionselement 16a und dem Aufnahmeinduktionselement 26a ein horizontaler Versatz 46a (vgl. Figur 3) von 20 mm besteht. Kreisförmig dargestellte Messpunkte der zweiten Messreihe 158a stehen wiederum jeweils für durch die Steuereinheit 18a bestimmte Korrekturfaktoren 42a. Rechteckig dargestellte Messpunkte der zweiten Messreihe 158a stehen wiederum jeweils für reale Messwerte, aus welchen anhand der obigen Gleichung (21) der Korrekturfaktor 42a berechnet wurde.

Eine dritte Messreihe 160a in dem linken Diagramm zeigt den Verlauf des Korrekturfaktors 42a in Abhängigkeit des Koppelfaktors 52a für den Fall, dass zwischen dem Versorgungsinduktionselement 16a und dem Aufnahmeinduktionselement 26a ein horizontaler Versatz 46a (vgl. Figur 3) von 40 mm besteht. Kreisförmig dargestellte Messpunkte der dritten Messreihe 160a stehen wiederum jeweils für durch die Steuereinheit 18a bestimmte Korrekturfaktoren 42a. Rechteckig dargestellte Messpunkte der dritten Messreihe 160a stehen wiederum jeweils für reale Messwerte, aus welchen anhand der obigen Gleichung (21) der Korrekturfaktor 42a berechnet wurde.

Figur 9 zeigt ein schematisches Verfahrensfließbild eines Verfahrens zum Betrieb des Induktionsenergieübertragungssystems 10a. Das Verfahren umfasst zumindest zwei Verfahrensschritte 162a, 164a. In einem ersten Verfahrensschritt 162a des Verfahrens wird zur Steuerung der Versorgungseinheit 14a der Parametersatz 28a herangezogen, wobei zumindest ein Parameter 32a des Parametersatzes 28a von der Aufstelleinheit 20a bereitgestellt wird. In einem zweiten Verfahrensschritt 164a des Verfahrens wird zusätzlich der Informationsparametersatz 36a von der Aufstelleinheit 20a bereitgestellt, welcher zur Bestimmung der Koeffizienten 38a der zumindest einen multivariablen Regressionsgleichung herangezogen wird, wobei daraus der zumindest eine Korrekturfaktor 40a, 42a für zumindest einen der Parameter 30a, 32a, 34a des Parametersatzes 28a oder der neue Parametersatz 44a bestimmt wird.

In Figur 10 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 9 verwiesen werden kann. Zur Unterscheidung der Ausführungsbeispiele ist der Buchstabe a in den Bezugszeichen des Ausführungsbeispiels in den Figuren 1 bis 9 durch den Buchstaben b in den Bezugszeichen des Ausführungsbeispiels der Figur 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 9 verwiesen werden.

Figur 10 zeigt ein weiteres Ausführungsbeispiel eines Induktionsenergieübertragungssystems 10b in einer schematischen Darstellung. Das Induktionsenergieübertragungssystem 10b weist eine Aufstellplatte 12b und eine Versorgungseinheit 14b auf. Die Versorgungseinheit 14b weist zumindest ein unterhalb der Aufstellplatte angeordnetes Versorgungsinduktionselement 16b zur induktiven Bereitstellung von Energie auf. Vorliegend umfasst die Versorgungseinheit 14b insgesamt zwei Versorgungsinduktionselemente 16b. Das Induktionsenergieübertragungssystem 10b weist eine Steuereinheit 18b zur Steuerung der Versorgungseinheit 14b auf.

Im Unterschied zu dem vorhergehenden Ausführungsbeispiel ist das Induktionsenergieübertragungssystem 10b als ein Haushaltkleingeräteversorgungssystem ausgebildet und umfasst ein Induktionshaushaltsgerät 84b, welches als Kleingeräteversorgungsgerät ausgebildet ist und welches die Steuereinheit 18b und die Versorgungseinheit 14b umfasst. Die Aufstellplatte 12b des Induktionsenergieübertragungssystems 10b ist als eine Küchenarbeitsplatte 60b ausgebildet.

Das Induktionsenergieübertragungssystem 10b umfasst eine Aufstelleinheit 20b zum Aufstellen auf die Aufstellplatte 12b. Die Aufstelleinheit 20b weist eine Aufnahmeeinheit 24b mit einem Aufnahmeinduktionselement 26b zu einem Empfang der durch die Versorgungseinheit 14b induktiv bereitgestellten Energie auf. Vorliegend ist die Aufstelleinheit 20b als ein Haushaltskleingerät ausgebildet, und zwar als eine Küchenmaschine 86b. Das Induktionsenergieübertragungssystem 10b weist vorliegend eine weitere Aufstelleinheit 22b auf. Die weitere Aufstelleinheit 22b umfasst ebenfalls eine Aufnahmeeinheit mit einem Aufnahmeinduktionselement (nicht dargestellt) zu einem Empfang der durch das Versorgungsinduktionselement 16b der Versorgungseinheit 14b induktiv bereitgestellten Energie. Die weitere Aufstelleinheit 22b ist als ein Kochtopf 166b mit integrierter Rührfunktion ausgebildet.

Das Induktionsenergieübertragungssystem 10b weist eine Kommunikationseinheit 90b zu einer drahtlosen Kommunikation zwischen der Steuereinheit 18b und der Aufstelleinheit 20b und/oder der weiteren Aufstelleinheit 22b auf. Die Kommunikationseinheit 90b weist ein Kommunikationselement 92b, welches mit der Steuereinheit 18b verbunden ist, sowie zwei weitere Kommunikationselemente 94b, 96b auf, welche in der Aufstelleinheit 20b beziehungsweise in dem weiteren Aufstelleinheit 22b angeordnet sind. Vorliegend ist die Kommunikationseinheit 90b als eine NFC-Kommunikationseinheit ausgebildet und zu einer drahtlosen Kommunikation per NFC zwischen der Steuereinheit 18b und der Aufstelleinheit 20b und/oder der weiteren Aufstelleinheit 22b vorgesehen.

Analog zu dem vorhergehenden Ausführungsbeispiel ist die Steuereinheit 18b dazu vorgesehen, zur Steuerung der Versorgungseinheit 14a einen Parametersatz (nicht dargestellt) heranzuziehen und zumindest einen Parameter (nicht dargestellt) des Parametersatzes von der Aufstelleinheit 20b zu empfangen. Zudem ist die Steuereinheit 18b dazu vorgesehen, zusätzlich einen Informationsparametersatz (nicht dargestellt) von der Aufstelleinheit 20b und/oder der weiteren Aufstelleinheit 22b zu empfangen, diesen zur Bestimmung von Koeffizienten (nicht dargestellt) zumindest einer multivariablen Regressionsgleichung heranzuziehen und daraus zumindest einen Korrekturfaktor (nicht dargestellt) für zumindest einen Parameter des Parametersatzes oder einen neuen Parametersatz (nicht dargestellt) zu bestimmen. Hinsichtlich einer Funktionsweise der Steuereinheit 18b kann auf die obige Beschreibung des ersten Ausführungsbeispiels verwiesen werden.

### Bezugszeichen

- 10: Induktionsenergieübertragungssystem
- 12: Aufstellplatte
- 14: Versorgungseinheit
- 16: Versorgungsinduktionselement
- 18: Steuereinheit
- 20: Aufstelleinheit
- 22: weitere Aufstelleinheit
- 24: Aufnahmeeinheit
- 26: Aufnahmeinduktionselement
- 28: Parametersatz
- 30: Parameter
- 32: Parameter
- 34: Parameter
- 36: Informationsparametersatz
- 38: Koeffizient
- 40: Korrekturfaktor
- 42: Korrekturfaktor
- 44: neuer Parametersatz
- 46: horizontaler Versatz
- 48: Eigeninduktivität
- 50: Eigeninduktivität
- 52: Koppelfaktor
- 54: Korrekturfaktor
- 56: Lastwiderstand
- 58: Kochfeldplatte
- 60: Küchenarbeitsplatte
- 62: vertikaler Abstand
- 64: Oberseite
- 66: vertikaler Abstand
- 68: geometrischer Informationsparameter
- 70: weiterer geometrischer Informationsparameter
- 72: weiterer geometrischen Informationsparameter
- 74: Abschirmeinheit
- 76: Informationsparameter
- 78: Flussbündelungseinheit
- 80: Informationsparameter
- 82: weiterer Informationsparameter
- 84: Induktionshaushaltsgerät
- 86: Küchenmaschine
- 88: Wasserkocher
- 90: Kommunikationseinheit
- 92: Kommunikationselement
- 94: weiteres Kommunikationselement
- 96: weiteres Kommunikationselement
- 98: Abszisse
- 100: linke Ordinate
- 102: rechte Ordinate
- 104: Abszisse
- 106: linke Ordinate
- 108: rechte Ordinate
- 110: Abstand
- 112: erste Messreihe
- 114: zweite Messreihe
- 116: dritte Messreihe
- 118: erste Messreihe
- 120: zweite Messreihe
- 122: dritte Messreihe
- 128: Ferrit
- 130: Ausrichtung
- 132: weiterer Parameter
- 134: Ersatzwiderstand
- 136: Frequenz
- 138: Tastgrad
- 140: Burstmodus
- 142: Abszisse
- 144: Ordinate
- 146: erste Messreihe
- 148: zweite Messreihe
- 150: dritte Messreihe
- 152: Abszisse
- 154: Ordinate
- 156: erste Messreihe
- 158: zweite Messreihe
- 160: dritte Messreihe
- 162: erster Verfahrensschritt
- 164: zweiter Verfahrensschritt
- 166: Kochtopf
- 168: weiterer Parameter

## Patentansprüche

1. Induktionsenergieübertragungssystem (10a; 10b), insbesondere Induktionsgarsystem, mit einer Aufstellplatte (12a; 12b), mit einer Versorgungseinheit (14a; 14b), welche zumindest ein unterhalb der Aufstellplatte (12a; 12b) angeordnetes Versorgungsinduktionselement (16a; 16b) zur induktiven Bereitstellung von Energie aufweist, mit einer Steuereinheit (18a; 18b) zur Steuerung der Versorgungseinheit (14a; 14b), und mit zumindest einer Aufstelleinheit (20a, 22a; 20b, 22b), welche zumindest eine Aufnahmeeinheit (24a; 24b) mit zumindest einem Aufnahmeinduktionselement (26a; 26b) zu einem Empfang der induktiv bereitgestellten Energie aufweist, wobei die Steuereinheit (18a; 18b) dazu vorgesehen ist, zur Steuerung der Versorgungseinheit (14a; 14b) einen Parametersatz (28a) heranzuziehen und zumindest einen Parameter (30a, 32a, 34a) des Parametersatzes (28a) von der Aufstelleinheit (20a, 22a; 20b, 22b) zu empfangen, **dadurch gekennzeichnet, dass** die Steuereinheit (18a; 18b) dazu vorgesehen ist, zusätzlich einen Informationsparametersatz (36a) von der Aufstelleinheit (20a, 22a; 20b, 22b) zu empfangen, diesen zur Bestimmung von Koeffizienten (38a) zumindest einer multivariablen Regressionsgleichung heranzuziehen und daraus zumindest einen Korrekturfaktor (40a, 42a) für zumindest einen Parameter (30a, 32a, 34a) des Parametersatzes (28a) oder einen neuen Parametersatz (44a) zu bestimmen.

2. Induktionsenergieübertragungssystem (10a; 10b) nach Anspruch 1, **dadurch gekennzeichnet, dass** die Steuereinheit (18a; 18b) dazu vorgesehen ist, bei der Bestimmung des neuen Parametersatzes (44a) einen horizontalen Versatz (46a) zwischen dem Versorgungsinduktionselement (16a; 16b) und dem Aufnahmeinduktionselement (26a; 26b) zu berücksichtigen.

3. Induktionsenergieübertragungssystem (10a; 10b) nach Anspruch 1 oder 2, **dadurch gekennzeichnet, dass** die Steuereinheit (18a; 18b) dazu vorgesehen ist, einen Korrekturfaktor (40a) für eine Eigeninduktivität (48a) des Versorgungsinduktionselements (16a; 16b) zu bestimmen.

4. Induktionsenergieübertragungssystem (10a; 10b) nach einem der vorhergehenden Ansprüche, **dadurch gekennzeichnet, dass** die Steuereinheit (18a; 18b) dazu vorgesehen ist, einen Korrekturfaktor (42a) für eine Eigeninduktivität (50a) des Aufnahmeinduktionselements (26a; 26b) zu bestimmen.

5. Induktionsenergieübertragungssystem (10a; 10b) nach einem der vorhergehenden Ansprüche, **dadurch gekennzeichnet, dass** die Steuereinheit (18a; 18b) dazu vorgesehen ist, einen Korrekturfaktor (54a) für einen Lastwiderstand (56a) der Aufstelleinheit (20a, 22a; 20b, 22b) zu bestimmen.

6. Induktionsenergieübertragungssystem (10a) nach einem der vorhergehenden Ansprüche, **dadurch gekennzeichnet, dass** die Aufstellplatte (12a) als eine Kochfeldplatte (58a) ausgebildet ist.

7. Induktionsenergieübertragungssystem (10b) nach einem der Ansprüche 1 bis 6, **dadurch gekennzeichnet, dass** die Aufstellplatte (12b) als eine Küchenarbeitsplatte (60b) ausgebildet ist.

8. Induktionsenergieübertragungssystem (10a; 10b) nach einem der vorhergehenden Ansprüche, **dadurch gekennzeichnet, dass** die Steuereinheit (18a; 18b) dazu vorgesehen ist, bei der Bestimmung der Koeffizienten (38a) der multivariablen Regressionsgleichung einen vertikalen Abstand (62a) zwischen dem Versorgungsinduktionselement (16a; 16b) und einer Oberseite (64a) der Aufstellplatte (12a; 12b) heranzuziehen.

9. Induktionsenergieübertragungssystem (10a; 10b) nach einem der vorhergehenden Ansprüche, **dadurch gekennzeichnet, dass** der Informationsparametersatz (36a) einen vertikalen Abstand (66a) zwischen dem Aufnahmeinduktionselement (26a; 26b) und einer Oberseite (64a) der Aufstellplatte (12a; 12b) beinhaltet.

10. Induktionsenergieübertragungssystem (10a; 10b) nach einem der vorhergehenden Ansprüche, **dadurch gekennzeichnet, dass** der Informationsparametersatz (36a) zumindest einen geometrischen Informationsparameter (68a, 70a, 72a) des Aufnahmeinduktionselements (26a; 26b) umfasst.

11. Induktionsenergieübertragungssystem (10a; 10b) nach einem der vorhergehenden Ansprüche, **dadurch gekennzeichnet, dass** die Aufstelleinheit (20a, 22a; 20b, 22b) eine Abschirmeinheit (74a) aufweist und der Informationsparametersatz (36a) zumindest einen die Abschirmeinheit (74a) betreffenden Informationsparameter (76a) umfasst.

12. Induktionsenergieübertragungssystem (10a; 10b) nach einem der vorhergehenden Ansprüche, **dadurch gekennzeichnet, dass** die Aufnahmeeinheit (24a; 24b) eine Flussbündelungseinheit (78a) aufweist und der Informationsparametersatz (36a) zumindest einen die Flussbündelungseinheit (78a) betreffenden Informationsparameter (80a, 82a) umfasst.

13. Aufstelleinheit (20a, 22a; 20b, 22b), insbesondere Haushaltskleingerät, geeignet für das Induktionsenergieübertragungssystem (10a; 10b) nach einem der vorhergehenden Ansprüche.

14. Induktionshaushaltsgerät (84a; 84b), insbesondere Induktionskochfeld, geeignet für das Induktionsenergieübertragungssystem nach einem der Ansprüche 1 bis 12, welches die Versorgungseinheit (14a; 14b) und die Steuereinheit (18a; 18b) umfasst.

15. Verfahren zum Betrieb eines Induktionsenergieübertragungssystems, insbesondere nach einem der Ansprüche 1 bis 12, mit einer Aufstellplatte (12a; 12b), mit einer Versorgungseinheit (14a; 14b), welche zumindest ein unterhalb der Aufstellplatte (12a; 12b) angeordnetes Versorgungsinduktionselement (16a; 16b) zur induktiven Bereitstellung von Energie aufweist, und mit zumindest einer Aufstelleinheit (20a, 22a; 20b, 22b) , welche zumindest eine Aufnahmeeinheit (24a; 24b) mit zumindest einem Aufnahmeinduktionselement (26a; 26b) zu einem Empfang der induktiv bereitgestellten Energie aufweist, wobei zur Steuerung der Versorgungseinheit (14a; 14b) ein Parametersatz (28a) herangezogen und zumindest ein Parameter (30a, 32a, 34a) des Parametersatzes (28a) von der Aufstelleinheit (20a, 22a; 20b, 22b) bereitgestellt wird, **dadurch gekennzeichnet, dass** zusätzlich ein Informationsparametersatz (36a) von der Aufstelleinheit (20a, 22a; 20b, 22b) bereitgestellt wird, welcher zur Bestimmung von Koeffizienten (38a) zumindest einer multivariablen Regressionsgleichung herangezogen wird, wobei daraus zumindest ein Korrekturfaktor (40a, 42a) für zumindest einen Parameter (30a, 32a, 34a) des Parametersatzes (28a) oder ein neuer Parametersatz (44a) bestimmt wird.

## Claims

1. Induction energy transmission system (10a; 10b), in particular an induction cooking system, with a set-down plate (12a; 12b), with a supply unit (14a; 14b) which has at least one supply induction element (16a; 16b) arranged below the set-down plate (12a; 12b) for Inductive provision of energy, with a control unit (18a; 18b) for controlling the supply unit (14a; 14b), and with at least one set-down unit (20a, 22a; 20b, 22b) which has at least one receiving unit (24a; 24b) with at least one receiving induction element (26a; 26b) for receiving the inductively provided energy, wherein the control unit (18a; 18b) is designed to use a parameter set (28a) so as to control the supply unit (14a; 14b) and to receive at least one parameter (30a, 32a, 34a) of the parameter set (28a) from the set-down unit (20a, 22a; 20b, 22b), **characterised in that** the control unit (18a; 18b) is designed to receive in addition an information parameter set (36a) from the set-down unit (20a, 22a; 20b, 22b); 20b, 22b), to use this to determine coefficients (38a) of at least one multivariable regression equation and from this to determine at least one correction factor (40a, 42a) for at least one parameter (30a, 32a, 34a) of the parameter set (28a) or determine a new parameter set (44a).

2. Induction energy transmission system (10a; 10b) according to claim 1, **characterised in that** the control unit (18a; 18b) is designed to take into account a horizontal offset (46a) between the supply induction element (16a; 16b) and the receiving induction element (26a; 26b) when determining the new parameter set (44a).

3. Induction energy transmission system (10a; 10b) according to claim 1 or 2, **characterised in that** the control unit (18a; 18b) is designed to determine a correction factor (40a) for a self-inductance (48a) of the supply induction element (16a; 16b).

4. Induction energy transmission system (10a; 10b) according to one of the preceding claims, **characterised in that** the control unit (18a; 18b) is designed to determine a correction factor (42a) for a self-inductance (50a) of the receiving induction element (26a; 26b).

5. Induction energy transmission system (10a; 10b) according to one of the preceding claims, **characterised in that** the control unit (18a; 18b) is designed to determine a correction factor (54a) for a load resistance (56a) of the set-down unit (20a, 22a; 20b, 22b).

6. Induction energy transmission system (10a) according to one of the preceding claims, **characterised in that** the set-down plate (12a) is configured as a hob plate (58a).

7. Induction energy transmission system (10b) according to claims 1 to 6, **characterised in that** the set-down plate (12b) is configured as a kitchen worktop (60b).

8. Induction energy transmission system (10a; 10b) according to one of the preceding claims, **characterised in that** the control unit (18a; 18b) is designed to use a vertical distance (62a) between the supply induction element (16a; 16b) and an upper side (64a) of the set-down plate (12a; 12b) when determining the coefficients (38a) of the multivariable regression equation.

9. Induction energy transmission system (10a; 10b) according to one of the preceding claims, **characterised in that** the information parameter set (36a) contains a vertical distance (66a) between the receiving induction element (26a; 26b) and an upper side (64a) of the set-down plate (12a; 12b).

10. Induction energy transmission system (10a; 10b) according to one of the preceding claims, **characterised in that** the information parameter set (36a) comprises at least one geometric information parameter (68a, 70a, 72a) of the receiving induction element (26a; 26b).

11. Induction energy transmission system (10a; 10b) according to one of the preceding claims, **characterised in that** the set-down unit (20a, 22a; 20b, 22b) comprises a shielding unit (74a) and the information parameter set (36a) comprises at least one information parameter (76a) relating to the shielding unit (74a).

12. Induction energy transmission system (10a; 10b) according to one of the preceding claims, **characterised in that** the receiving unit (24a; 24b) comprises a flux-bundling unit (78a) and the information parameter set (36a) comprises at least one information parameter (80a, 82a) relating to the flux-bundling unit (78a).

13. Set-down unit (20a, 22a; 20b, 22b), in particular a small household appliance, suitable for the induction energy transmission system (10a; 10b) according to one of the preceding claims.

14. Induction household appliance (84a; 84b), in particular an induction hob, suitable for the induction energy transmission system according to one of claims 1 to 12, which comprises the supply unit (14a; 14b) and the control unit (18a; 18b).

15. Method for operating an induction energy transmission system, in particular according to one of claims 1 to 12, with a set-down plate (12a; 12b), with a supply unit (14a; 14b) which has at least one supply induction element (16a; 16b) arranged below the set-down plate (12a; 12b) for the inductive provision of energy, and with at least one set-down unit (20a, 22a; 20b, 22b) which has at least one receiving unit (24a; 24b) with at least one receiving induction element (26a; 26b) for receiving the inductively provided energy, wherein a parameter set (28a) is used so as to control the supply unit (14a; 14b) and at least one parameter (30a, 32a, 34a) of the parameter set (28a) is provided by the set-down unit (20a, 22a; 20b, 22b), **characterised in that** an information parameter set (36a) is additionally provided by the set-down unit (20a, 22a; 20b, 22b), which is used to determine coefficients (38a) of at least one multivariable regression equation, wherein from this at least one correction factor (40a, 42a) for at least one parameter (30a, 32a, 34a) of the parameter set (28a) is determined or a new parameter set (44a) is determined.

## Revendications

1. Système de transmission d'énergie à induction (10a, 10b), notamment système de cuisson à induction, comprenant :
une plaque de support (12a, 12b),
une unité d'alimentation (14a, 14b), qui comprend au moins un élément d'induction d'alimentation (16a, 16b) disposé sous la plaque de support (12a, 12b) destiné à fournir de l'énergie par induction,
une unité de commande (18a, 18b) destinée à commander l'unité d'alimentation (14a, 14b), et
au moins une unité à poser (20a, 22a, 20b, 22b), qui comprend au moins une unité de réception (24a, 24b) comportant au moins un élément récepteur d'induction (26a, 26b) destiné à recevoir l'énergie fournie par induction,
dans lequel l'unité de commande (18a, 18b) est configurée pour utiliser un ensemble de paramètres (28a) et pour recevoir depuis l'unité à poser (20a, 22a, 20b, 22b) au moins un paramètre (30a, 32a, 34a) de l'ensemble de paramètres (28a) afin de commander l'unité d'alimentation (14a, 14b),
**caractérisé en ce que** l'unité de commande (18a, 18b) est configurée pour recevoir en outre un ensemble de paramètres d'information (36a) depuis l'unité à poser (20a, 22a, 20b, 22b), pour utiliser cet ensemble de paramètres afin de déterminer des coefficients (38a) d'au moins une équation de régression à plusieurs variables et pour déterminer à partir de là au moins un facteur de correction (40a, 42a) pour au moins un paramètre (30a, 32a, 34a) de l'ensemble de paramètres (28a) ou un nouvel ensemble de paramètres (44a).

2. Système de transmission d'énergie à induction (10a, 10b) selon la revendication 1, **caractérisé en ce que** l'unité de commande (18a, 18b) est configurée pour prendre en compte, lors de la détermination du nouvel ensemble de paramètres (44a), un décalage horizontal (46a) entre l'élément d'induction d'alimentation (16a, 16b) et l'élément récepteur d'induction (26a, 26b).

3. Système de transmission d'énergie à induction (10a, 10b) selon la revendication 1 ou 2, **caractérisé en ce que** l'unité de commande (18a, 18b) est configurée pour déterminer un facteur de correction (40a) pour une inductance propre (48a) de l'élément d'induction d'alimentation (16a, 16b).

4. Système de transmission d'énergie à induction (10a, 10b) selon l'une des revendications précédentes, **caractérisé en ce que** l'unité de commande (18a, 18b) est configurée pour déterminer un facteur de correction (42a) pour une inductance propre (50a) de l'élément récepteur d'induction (26a, 26b).

5. Système de transmission d'énergie à induction (10a, 10b) selon l'une des revendications précédentes, **caractérisé en ce que** l'unité de commande (18a, 18b) est configurée pour déterminer un facteur de correction (54a) pour une résistance de charge (56a) de l'unité à poser (20a, 22a, 20b, 22b).

6. Système de transmission d'énergie à induction (10a) selon l'une des revendications précédentes, **caractérisé en ce que** la plaque de support (12a) est configurée sous la forme d'une plaque de cuisson (58a).

7. Système de transmission d'énergie à induction (10b) selon l'une des revendications 1 à 6, **caractérisé en ce que** la plaque de support (12b) est configurée sous la forme d'un plan de travail (60b).

8. Système de transmission d'énergie à induction (10a, 10b) selon l'une des revendications précédentes, **caractérisé en ce que** l'unité de commande (18a, 18b) est configurée de façon à utiliser, pour déterminer les coefficients (38a) de l'équation de régression à plusieurs variables, une distance verticale (62a) entre l'élément d'induction d'alimentation (16a, 16b) et un côté supérieur (64a) de la plaque de support (12a, 12b).

9. Système de transmission d'énergie à induction (10a, 10b) selon l'une des revendications précédentes, **caractérisé en ce que** l'ensemble de paramètres d'information (36a) contient une distance verticale (66a) entre l'élément récepteur d'induction (26a, 26b) et un côté supérieur (64a) de la plaque de support (12a, 12b).

10. Système de transmission d'énergie à induction (10a, 10b) selon l'une des revendications précédentes, **caractérisé en ce que** l'ensemble de paramètres d'information (36a) comprend au moins un paramètre d'information géométrique (68a, 70a, 72a) de l'élément récepteur d'induction (26a, 26b).

11. Système de transmission d'énergie à induction (10a, 10b) selon l'une des revendications précédentes, **caractérisé en ce que** l'unité à poser (20a, 22a, 20b, 22b) comprend une unité de blindage (74a) et l'ensemble de paramètres d'information (36a) comprend au moins un paramètre d'information (76a) concernant l'unité de blindage (74a).

12. Système de transmission d'énergie à induction (10a, 10b) selon l'une des revendications précédentes, **caractérisé en ce que** l'unité de réception (24a, 24b) comprend une unité de concentration de flux (78a) et l'ensemble de paramètres d'information (36a) comprend au moins un paramètre d'information (80a, 82a) ayant trait à l'unité de concentration de flux (78a).

13. Unité à poser (20a, 22a, 20b, 22b), notamment petit appareil électroménager, adaptée pour être utilisée avec un système de transmission d'énergie à induction (10a, 10b) selon l'une des revendications précédentes.

14. Appareil électroménager à induction (84a, 84b), notamment table de cuisson à induction, adapté pour être utilisé avec le système de transmission d'énergie à induction selon l'une des revendications 1 à 12, ledit système comprenant l'unité d'alimentation (14a, 14b) et l'unité de commande (18a, 18b).

15. Procédé de fonctionnement d'un système de transmission d'énergie à induction, notamment selon l'une des revendications 1 à 12, ledit système comprenant :
une plaque de support (12a, 12b),
une unité d'alimentation (14a, 14b), qui comprend au moins un élément d'induction d'alimentation (16a, 16b) disposé sous la plaque de support (12a, 12b) destiné à fournir de l'énergie par induction, et
au moins une unité à poser (20a, 22a, 20b, 22b), qui comprend au moins une unité de réception (24a, 24b) comportant au moins un élément récepteur d'induction (26a, 26b) destiné à recevoir l'énergie fournie par induction,
dans lequel, pour commander l'unité d'alimentation (14a, 14b), un ensemble de paramètres (28a) est utilisé et au moins un paramètre (30a, 32a, 34a) de l'ensemble de paramètres (28a) est fourni depuis l'unité à poser (20a, 22a, 20b, 22b),
**caractérisé en ce qu'**un ensemble de paramètres d'information (36a) est fourni en outre depuis l'unité à poser (20a, 22a, 20b, 22b), lequel est utilisé pour déterminer des coefficients (38a) d'au moins une équation de régression à multivariables, et dans lequel, à partir de là, au moins un facteur de correction (40a, 42a) pour au moins un paramètre (30a, 32a, 34a) de l'ensemble de paramètres (28a) ou un nouvel ensemble de paramètres (44a) est déterminé.
